# EUROPEAN PATENT APPLICATION

(11) **EP 4 213 400 A1**
(43) Date of publication of application: **19.07.2023**
(21) Application number: 21871514.2
(22) Date of filing: 23.09.2021
(51) Int. Cl.: H04B 7/0413, H04W 72/04

(54) **METHOD AND DEVICE USED IN NODE FOR WIRELESS COMMUNICATION**

(30) Priority: 25.09.2020 CN 202011024677; 21.05.2021 CN 202110555976
(71) Applicant: SHANGHAI LANGBO COMMUNICATION TECHNOLOGY COMPANY LIMITED, Shanghai 200240 (CN)
(72) Inventor: WU, Lu, Shanghai 201206 (CN); ZHANG, Xiaobo, Shanghai 201206 (CN)
(74) Representative: Zhang, Fan
(86) International application number: PCT/CN2021/119744
(87) International publication number: WO 2022/063145

(57) **Abstract**

Disclosed are a method and device used in a node for wireless communication. The method comprises: a first node receives a first reference signal group; and when a first condition is satisfied, sends a first signal in a first air interface resource group. The measurement on the first reference signal group is used for determining whether the first condition is satisfied; whether the first condition is satisfied is used for determining whether to send the first signal; the first signal is used for determining a second reference signal; the first condition comprises a value of a first counter is not less than a first threshold; the first reference signal is used for determining the spatial relation of the first air interface resource group; whether the first reference signal and the second reference signal have a QCL relation is relevant to whether the second reference signal belongs to a first reference signal subset or a second reference signal subset; when the second reference signal belongs to the second reference signal subset, the first reference signal and the second reference signal do not have a QCL relation.

## Description

### TECHNICAL FIELD

The present application relates to transmission methods and devices in wireless communication systems, and in particular to a method and device of radio signal transmission in a wireless communication system supporting cellular networks.

### BACKGROUND

In Long-term Evolution (LTE) system, inter-cell handover is controlled by the base station based on a measurement of a User Equipment (UE). Inter-cell handover in 3rd Generation Partner Project (3GPP) Release 15 (R15) basically follows the mechanism in LTE. In New Radio (NR) system, more application scenarios need to be supported. Some application scenarios, such as Ultra-Reliable and Low Latency Communications (URLLC), put forward high requirements for delay and new challenges for inter-cell handover.

In NR system, Massive Multiple Input Multiple Output (MIMO) is an important technical feature. For the massive MIMO, multiple antennas based on beamforming form a narrow beam which points to a particular direction to improve the quality of communication. Since the beam formed through beamforming of multiple antennas is usually narrow, beams from both sides of communications shall be aligned to enable effective communications.

### SUMMARY

Inventors have found through researches that beam-based communications will bring negative impacts on inter-cell handover, such as additional time delay and ping-pong effect. How to reduce these negative impacts and further improve the performance of cell boundary users to meet the needs of various application scenarios is a problem to be solved.

To address the above problem, the present application provides a solution. It should be noted that although the above description uses large-scale MIMO and beam-based communication scenarios as examples, the application is also applicable to other scenarios, such as LTE multi-antenna systems, where similar technical effects can be achieved. Additionally, the adoption of a unified solution for various scenarios (including but not limited to large-scale MIMO, beam-based communications and LTE multi-antenna systems) contributes to the reduction of hardware complexity and costs. If no conflict is incurred, embodiments in any node in the present application and the characteristics of the embodiments are also applicable to any other node, and vice versa. And the embodiments in the present application and the characteristics in the embodiments can be arbitrarily combined if there is no conflict.

In one embodiment, interpretations of the terminology in the present application refer to definitions given in the 3GPP TS36 series.

In one embodiment, interpretations of the terminology in the present application refer to definitions given in the 3GPP TS38 series.

In one embodiment, interpretations of the terminology in the present application refer to definitions given in the 3GPP TS37 series.

In one embodiment, interpretations of the terminology in the present application refer to definitions given in Institute of Electrical and Electronics Engineers (IEEE) protocol specifications.

The present application provides a method in a first node for wireless communications, comprising:
receiving a first information group;
receiving a first reference signal group; and
when a first condition is satisfied, transmitting a first signal in a first radio resource group;
herein, the first information group is used to indicate the first reference signal group, and a measurement performed on the first reference signal group is used to judge whether the first condition is satisfied; whether the first condition is satisfied is used to determine whether the first signal is transmitted; the first signal is used to determine a second reference signal, and the second reference signal is one of M reference signals, M being a positive integer greater than 1; the first condition comprises that a value of a first counter is not less than a first threshold; a first reference signal is used to determine a spatial-domain relation of the first radio resource group; whether the first reference signal and the second reference signal are QCL is related to whether the second reference signal belongs to a first reference signal subset or belongs to a second reference signal subset; when the second reference signal belongs to the first reference signal subset, the first reference signal and the second reference signal are QCL; when the second reference signal belongs to the second reference signal subset, the first reference signal and the second reference signal are not QCL; the first threshold is a positive integer, and the first reference signal subset and the second reference signal subset are respectively subsets of the M reference signals; the first information group comprises a positive integer number of information block(s).

In one embodiment, a problem to be solved in the present application comprises: how to quickly switch between beams of different cells to improve the performance of cell boundary users and avoid the ping-pong effect brought by frequent cell handover. In the above method, the UE measures a reference signal from the cell and an adjacent cell and reports the beam to the cell, the beam reporting comprises a beam selected by the UE, which solves the above problem.

In one embodiment, characteristics of the above method comprise: reference signals in the first reference signal subset are reference signals in the cell, when a beam selected by the first node is from the cell, a beam used to transmit beam reporting and a selected beam are QCL; the second reference signal subset comprises a reference signal of an adjacent cell, when a beam selected by the first node is from an adjacent cell, a beam used for transmitting beam reporting and a selected beam are not QCL.

In one embodiment, advantages of the above method comprise: implementing rapid cross-cell beam handover, thus improving the performance of cell-boundary users, and avoiding the delay and potential service interruption of cell handover.

In one embodiment, advantages of the above method comprise: whether a beam selected by a UE is from the cell or an adjacent cell, the UE will transmit a beam reporting to the cell in priority, and the cell will decide whether to switch to the adjacent cell, thus the ping-pong effect brought by frequent cell handover is avoided while ensuring the quality of service.

According to one aspect of the present application, it is characterized in that a transmitter of the first reference signal subset is a first cell, a transmitter of the second reference signal subset is a second cell, the first cell is a serving cell of the first node, and the second cell is a non-serving cell of the first node.

According to one aspect of the present application, it is characterized in that when the second reference signal belongs to the second reference signal subset, the first radio resource group comprises a first radio resource block and a second radio resource block, the first signal comprises a first sub-signal and a second sub-signal, the first sub-signal is transmitted in the first radio resource block, the second sub-signal is transmitted in the second radio resource block, the second sub-signal carries a first information block, and the first information block is used to indicate the second reference signal.

According to one aspect of the present application, it is characterized in that when the second reference signal belongs to the second reference signal subset, the first reference signal belongs to the first reference signal subset, or the first reference signal and a reference signal in the first reference signal subset are QCL.

According to one aspect of the present application, comprising:
when the first condition is satisfied and the second reference signal belongs to the second reference signal subset, transmitting a second signal in a second radio resource group;
herein, the second signal is used to determine the second reference signal, a third reference signal is used to determine a spatial-domain relation of the second radio resource group, and the second reference signal and the third reference signal are QCL.

According to one aspect of the present application, comprising:
monitoring a response for the first signal in a first time window;
when both the first condition and a second condition are satisfied and the second reference signal belongs to the second reference signal subset, transmitting a second signal in a second radio resource group;
herein, time-domain resources occupied by the first signal are used to determine the first time window, the first time window is not later than a start time for transmitting the second signal, the second signal is used to determine the second reference signal, a third reference signal is used to determine a spatial-domain relation of the second radio resource group, and the second reference signal and the third reference signal are QCL; the second condition comprises: not detecting the response for the first signal in the first time window.

According to one aspect of the present application, comprising:
receiving M configuration information block(s); and
receiving the M reference signals;
herein, the M configuration information block(s) is(are respectively) used to indicate the M reference signals.

The present application provides a method in a second node for wireless communications, comprising:
transmitting a first information group;
transmitting a first reference signal sub-group; and
motoring a first signal in a first radio resource group;
herein, the first information group is used to indicate a first reference signal group, and any reference signal in the first reference signal sub-group belongs to the first reference signal group; a measurement performed on the first reference signal group is used to judge whether a first condition is satisfied; whether the first condition is satisfied is used to determine whether the first signal is transmitted; the first signal is used to determine a second reference signal, and the second reference signal is one of M reference signals, M being a positive integer greater than 1; the first condition comprises that a value of a first counter is not less than a first threshold; a first reference signal is used to determine a spatial-domain relation of the first radio resource group; whether the first reference signal and the second reference signal are QCL is related to whether the second reference signal belongs to a first reference signal subset or belongs to a second reference signal subset; when the second reference signal belongs to the first reference signal subset, the first reference signal and the second reference signal are QCL; when the second reference signal belongs to the second reference signal subset, the first reference signal and the second reference signal are not QCL; the first threshold is a positive integer, and the first reference signal subset and the second reference signal subset are respectively subsets of the M reference signals; the first information group comprises a positive integer number of information block(s), the first reference signal group comprises a positive integer number of reference signal(s), and the first reference signal sub-group comprises a positive integer number of reference signal(s).

According to one aspect of the present application, it is characterized in that a transmitter of the first reference signal subset is a first cell, a transmitter of the second reference signal subset is a second cell, the first cell is a serving cell of a transmitter of the first signal, the second cell is a non-serving cell of a transmitter of the first signal, and the second node is a maintenance base station of the first cell.

According to one aspect of the present application, it is characterized in that when the second reference signal belongs to the second reference signal subset, the first radio resource group comprises a first radio resource block and a second radio resource block, the first signal comprises a first sub-signal and a second sub-signal, the first sub-signal is transmitted in the first radio resource block, the second sub-signal is transmitted in the second radio resource block, the second sub-signal carries a first information block, and the first information block is used to indicate the second reference signal.

According to one aspect of the present application, it is characterized in that when the second reference signal belongs to the second reference signal subset, the first reference signal belongs to the first reference signal subset, or the first reference signal and a reference signal in the first reference signal subset are QCL.

According to one aspect of the present application, comprising:
when the first signal is detected in the first radio resource group, transmitting a response for the first signal in a first time window;
herein, time-domain resources occupied by the first signal are used to determine the first time window.

According to one aspect of the present application, comprising:
transmitting M configuration information block(s); and
transmitting the first reference signal subset;
herein, the M configuration information block(s) is(are respectively) used to indicate the M reference signals.

According to one aspect of the present application, comprising:
monitoring a radio signal in each radio resource group other than the first radio resource group in a first radio resource set;
herein, the first radio resource group is any radio resource group in the first radio resource set, and the first signal is a radio signal monitored in the first radio resource group.

The present application provides a method in a third node for wireless communications, comprising:
transmitting a second reference signal sub-group; and
motoring a second signal in a second radio resource group;
herein, any reference signal in the second reference signal sub-group belongs to a first reference signal group, a measurement performed on the first reference signal group is used by a transmitter of the second signal to judge whether a first condition is satisfied; the first condition comprises that a value of a first counter is not less than a first threshold; the second signal is used to determine a second reference signal, a third reference signal is used to determine a spatial-domain relation of the second radio resource group, and the second reference signal and the third reference signal are QCL; the second reference signal is one of M reference signals, M being a positive integer greater than 1; whether the first condition is satisfied and whether the second reference signal belongs to a first reference signal subset or belongs to a second reference signal subset are used by the transmitter of the second signal to determine whether the second signal is transmitted; a necessary condition of the second signal being transmitted comprises: the first condition is satisfied and the second reference signal belongs to the second reference signal subset; the first threshold is a positive integer, and the first reference signal subset and the second reference signal subset are respectively subsets of the M reference signals; the first reference signal group comprises a positive integer number of reference signal(s), and the second reference signal sub-group comprises a positive integer number of reference signal(s).

According to one aspect of the present application, it is characterized in that a transmitter of the first reference signal subset is a first cell, a transmitter of the second reference signal subset is a second cell, the first cell is a serving cell of a transmitter of the second signal, the second cell is a non-serving cell of the transmitter of the second signal, and the third node is a maintenance base station of the second cell.

According to one aspect of the present application, it is characterized in that a necessary condition of the second signal being transmitted comprises: both the first condition and a second condition are satisfied and the second reference signal belongs to the second reference signal subset; the second condition comprises: not detecting a response for a first signal in a first time window; whether the first condition is satisfied is used to determine whether the first signal is transmitted; the first signal is used to determine a second reference signal, and the second reference signal is one of the M reference signals.

According to one aspect of the present application, comprising:
monitoring a radio signal in each radio resource group other than the second radio resource group in a second radio resource set;
herein, the second radio resource group is any radio resource group in the second radio resource set, and the second signal is a radio signal being monitored in the second radio resource group.

According to one aspect of the present application, comprising:
when the second signal is detected in the second radio resource group, transmitting a response for the second signal in a second time window;
herein, time-domain resources occupied by the second signal are used to determine the second time window.

According to one aspect of the present application, comprising:
transmitting the second reference signal subset;

The present application provides a first node for wireless communications, comprising:
a first receiver, receiving a first information group; receiving a first reference signal group; and
a first transmitter, when a first condition is satisfied, transmitting a first signal in a first radio resource group;
herein, the first information group is used to indicate the first reference signal group, and a measurement performed on the first reference signal group is used to judge whether the first condition is satisfied; whether the first condition is satisfied is used to determine whether the first signal is transmitted; the first signal is used to determine a second reference signal, and the second reference signal is one of M reference signals, M being a positive integer greater than 1; the first condition comprises that a value of a first counter is not less than a first threshold; a first reference signal is used to determine a spatial-domain relation of the first radio resource group; whether the first reference signal and the second reference signal are QCL is related to whether the second reference signal belongs to a first reference signal subset or belongs to a second reference signal subset; when the second reference signal belongs to the first reference signal subset, the first reference signal and the second reference signal are QCL; when the second reference signal belongs to the second reference signal subset, the first reference signal and the second reference signal are not QCL; the first threshold is a positive integer, and the first reference signal subset and the second reference signal subset are respectively subsets of the M reference signals; the first information group comprises a positive integer number of information block(s).

The present application provides a second node for wireless communications, comprising:
a second transmitter, transmitting a first information group; transmitting a first reference signal sub-group; and
a second receiver, monitoring a first signal in a first radio resource group;
herein, the first information group is used to indicate a first reference signal group, and any reference signal in the first reference signal sub-group belongs to the first reference signal group; a measurement performed on the first reference signal group is used to judge whether a first condition is satisfied; whether the first condition is satisfied is used to determine whether the first signal is transmitted; the first signal is used to determine a second reference signal, and the second reference signal is one of M reference signals, M being a positive integer greater than 1; the first condition comprises that a value of a first counter is not less than a first threshold; a first reference signal is used to determine a spatial-domain relation of the first radio resource group; whether the first reference signal and the second reference signal are QCL is related to whether the second reference signal belongs to a first reference signal subset or belongs to a second reference signal subset; when the second reference signal belongs to the first reference signal subset, the first reference signal and the second reference signal are QCL; when the second reference signal belongs to the second reference signal subset, the first reference signal and the second reference signal are not QCL; the first threshold is a positive integer, and the first reference signal subset and the second reference signal subset are respectively subsets of the M reference signals; the first information group comprises a positive integer number of information block(s), the first reference signal group comprises a positive integer number of reference signal(s), and the first reference signal sub-group comprises a positive integer number of reference signal(s).

The present application provides a third node for wireless communications, comprising:
a third transmitter, transmitting a second reference signal sub-group;
a third receiver, motoring a second signal in a second radio resource group;
herein, any reference signal in the second reference signal sub-group belongs to a first reference signal group, a measurement performed on the first reference signal group is used to judge whether a first condition is satisfied; the first condition comprises that a value of a first counter is not less than a first threshold; the second signal is used to determine a second reference signal, a third reference signal is used to determine a spatial-domain relation of the second radio resource group, and the second reference signal and the third reference signal are QCL; the second reference signal is one of M reference signals, M being a positive integer greater than 1; whether the first condition is satisfied and whether the second reference signal belongs to a first reference signal subset or belongs to a second reference signal subset are used to determine whether the second signal is transmitted; a necessary condition of the second signal being transmitted comprises: the first condition is satisfied and the second reference signal belongs to the second reference signal subset; the first threshold is a positive integer, and the first reference signal subset and the second reference signal subset are respectively subsets of the M reference signals; the first reference signal group comprises a positive integer number of reference signal(s), and the second reference signal sub-group comprises a positive integer number of reference signal(s).

In one embodiment, the present application has the following advantages over conventional schemes:
implementing rapid cross-cell beam handover, thus improving the performance of cell-boundary users;
the performance improvement brought by cell handover can be achieved, and the resulting delay and potential service interruption can be avoided;
whether a beam selected by a UE is from the cell or an adjacent cell, the UE will transmit a beam reporting to the cell in priority, and the cell will decide whether to switch to the adjacent cell, the ping-pong effect brought by frequent cell handover is avoided while the quality of service is ensured.

### BRIEF DESCRIPTION OF THE DRAWINGS

Other features, objects and advantages of the present application will become more apparent from the detailed description of non-restrictive embodiments taken in conjunction with the following drawings:
FIG. 1 illustrates a flowchart of a first information group, a first reference signal group and a first signal according to one embodiment of the present application;
FIG. 2 illustrates a schematic diagram of a network architecture according to one embodiment of the present application;
FIG. 3 illustrates a schematic diagram of a radio protocol architecture of a user plane and a control plane according to one embodiment of the present application;
FIG. 4 illustrates a schematic diagram of a first communication device and a second communication device according to one embodiment of the present application;
FIG. 5 illustrates a flowchart of wireless transmission according to one embodiment of the present application;
FIG. 6 illustrates a schematic diagram of a second reference signal according to one embodiment of the present application;
FIG. 7 illustrates a schematic diagram of a first reference signal subset and a second reference signal subset according to one embodiment of the present application;
FIG. 8 illustrates a schematic diagram of a first signal being used to determine a second reference signal according to one embodiment of the present application;
FIG. 9 illustrates a schematic diagram of a first reference signal according to one embodiment of the present application;
FIG. 10 illustrates a schematic diagram of a second signal according to one embodiment of the present application;
FIG. 11 illustrates a schematic diagram of a second signal according to another embodiment of the present application;
FIG. 12 illustrates a structure block diagram of a processor in a first node according to one embodiment of the present application;
FIG. 13 illustrates a structure block diagram of a processor in a second node according to one embodiment of the present application;
FIG. 14 illustrates a structure block diagram of a processor in a third node according to one embodiment of the present application.

### DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

### Embodiment 1

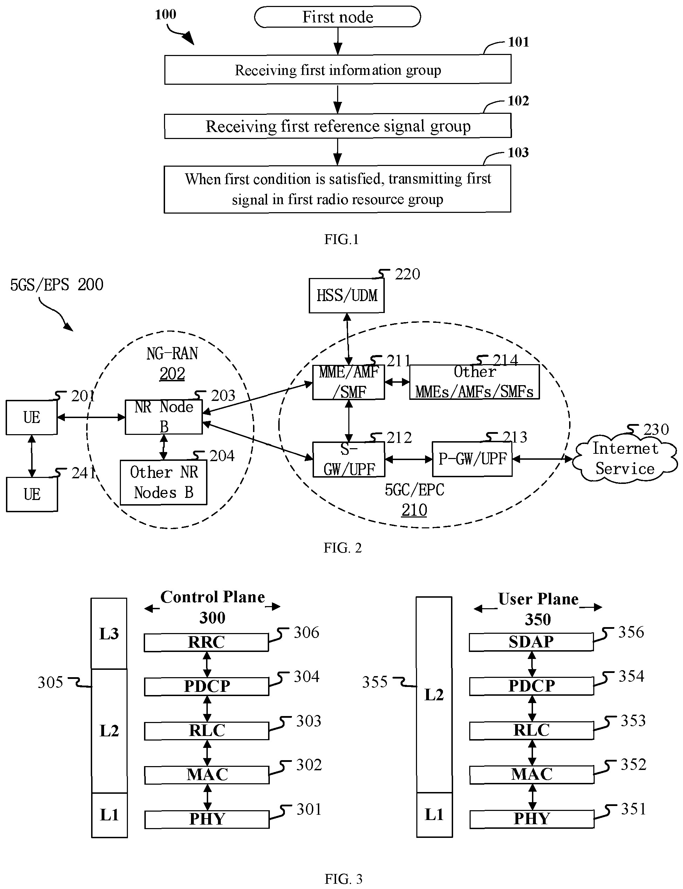

Embodiment 1 illustrates a flowchart of a first information group, a first reference signal group and a first signal according to one embodiment of the present application, as shown in FIG. 1. In step 100 illustrated by FIG. 1, each box represents a step. Particularly, the sequential order of steps in these boxes does not necessarily mean that the steps are chronologically arranged.

In Embodiment 1, the first node in the present application receives a first information group in step 101; receives a first reference signal group in step 102; in step 103 when a first condition is satisfied, transmits a first signal in a first radio resource group; herein, the first information group is used to indicate the first reference signal group, and a measurement performed on the first reference signal group is used to judge whether the first condition is satisfied; whether the first condition is satisfied is used to determine whether the first signal is transmitted; the first signal is used to determine a second reference signal, and the second reference signal is one of M reference signals, M being a positive integer greater than 1; the first condition comprises that a value of a first counter is not less than a first threshold; a first reference signal is used to determine a spatial-domain relation of the first radio resource group; whether the first reference signal and the second reference signal are QCL is related to whether the second reference signal belongs to a first reference signal subset or belongs to a second reference signal subset; when the second reference signal belongs to the first reference signal subset, the first reference signal and the second reference signal are QCL; when the second reference signal belongs to the second reference signal subset, the first reference signal and the second reference signal are not QCL; the first threshold is a positive integer, and the first reference signal subset and the second reference signal subset are respectively subsets of the M reference signals; the first information group comprises a positive integer number of information block(s).

In one embodiment, the first information group is carried by a higher-layer signaling.

In one embodiment, the first information group is carried by an RRC signaling.

In one embodiment, the first information group comprises at least one IE in an RRC signaling.

In one embodiment, the first information group comprises multiple IEs in an RRC signaling.

In one embodiment, the first information group comprises partial or all fields in an IE in an RRC signaling.

In one embodiment, the first information group is carried by a MAC CE signaling.

In one embodiment, the first information group only comprises an information block.

In one embodiment, the first information group comprises more than one information block.

In one embodiment, there exist two information blocks in the first information group belonging to two IEs in an RRC signaling.

In one embodiment, any two information blocks in the first information group belong to a same IE in an RRC signaling.

In one embodiment, the first information group comprises a failureDetectionResourcesToAddModList field and a failureDetectionResourcesToReleaseList field in a RadioLinkMonitoringConfig IE, and for specific definitions of the RadioLinkMonitoringConfig IE, the failureDetectionResourcesToAddModList field and the failureDetectionResourcesToReleaseList field, refer to section 6.3.2 in 3GPP TS38.331.

In one embodiment, the first information group comprises failure Detection Resources, for the specific definition of the failure Detection Resources, refer to section 6 in 3GPP TS38.213.

In one embodiment, the first information group comprises a beamFailureDetectionResourceList, and for the specific meaning of the beamFailureDetectionResourceList, refer to section 6 in 3GPP TS38.213.

In one embodiment, the first information group comprises at least one ControlResourceSet IE, and for the specific meaning of the ControlResourceSet IE, refer to section 6.3.2 in 3GPP TS38.331.

In one embodiment, the first reference signal group comprises a Channel State Information-Reference Signal (CSI-RS).

In one embodiment, the first reference signal group comprises a periodic CSI-RS.

In one embodiment, the first reference signal group comprises at least one of a CSI-RS or a Synchronization Signal/Physical Broadcast CHannel(SS/PBCH) Block.

In one embodiment, the first reference signal group is used for a beam failure detection in a beam failure recovery mechanism.

In one embodiment, for the specific definition of beam failure recovery, refer to section 6 in 3GPP TS38.213.

In one embodiment, the first reference signal group is *q̅*₀ .

In one embodiment, for the specific meaning of the *q̅*₀, refer to section 6 in 3GPP TS38. 213.

In one embodiment, the first reference signal group is configured by failureDetectionResources.

In one embodiment, for the specific definition of the failure Detection Resources, refer to section 6 in 3GPP TS38. 213.

In one embodiment, a maximum number of reference signals comprised in the first reference signal group is configured by maxNrofFailureDetectionResources.

In one embodiment, for the specific meaning of themaxNrofFailureDetectionResources, refer to section 6.3.2 in 3GPP TS38.331.

In one embodiment, the first information group indicates a TCI state of a corresponding CORESETs used when a PDCCH is monitored, and the first reference signal group comprises a reference signal indicated by a TCI state of a corresponding CORESETs used when a PDCCH is monitored.

In one embodiment, a TCI state is used to indicate at least one reference signal.

In one embodiment, a reference signal indicated by a TCI state comprises at least one of a CSI-RS, an SRS, or an SS/PBCH block.

In one embodiment, a TCI state is used to indicate a reference signal whose type is QCL-TypeD.

In one embodiment, for the specific meaning of the QCL-TypeD, refer to section 5.1.5 in 3GPP TS38.214.

In one embodiment, a reference signal indicated by a TCI state is used to determine a Quasi-Co-Located (QCL) parameter.

In one embodiment, a reference signal indicated by a TCI state is used to determine spatial filtering.

In one embodiment, a reference signal indicated by a TCI state is used to determine spatial Rx parameter.

In one embodiment, a reference signal indicated by a TCI state is used to determine spatial Tx parameter.

In one embodiment, the QCL correspond to QCL-Type D.

In one embodiment, the first information group explicitly indicates the first reference signal group.

In one embodiment, the first information group implicitly indicates the first reference signal group.

In one embodiment, the first information group indicates an index of each reference signal in the first reference signal group.

In one embodiment, the first information group comprises configuration information of each reference signal in the first reference signal group.

In one embodiment, configuration information of any reference signal in the first reference signal group comprises at least one of period, time-domain offset, occupied time-domain resources, occupied frequency-domain resources, occupied code-domain resources, cyclic shift, Orthogonal Cover Code, occupied antenna port group, sequence, TCI state, spatial-domain filter, Spatial Rx parameters, or Spatial Tx parameters.

In one embodiment, the first information group comprises S information blocks, the first reference signal group comprises S reference signals, and the S information blocks are respectively used to indicate the S reference signals, S being a positive integer greater than 1.

In one embodiment, when a value of the first counter is not less than the first threshold, the first condition is satisfied.

In one embodiment, when and only when a value of the first counter is not less than the first threshold, the first condition is satisfied.

In one embodiment, when a value of the first counter is less than the first threshold, the first condition is not satisfied.

In one embodiment, when the first condition is not satisfied, the first node does not transmit the first signal.

In one embodiment, the first condition being satisfied is used to trigger a Beam Failuer Recovery.

In one embodiment, the first counter is BFI_COUNTER.

In one embodiment, an initial value of the first counter is 0.

In one embodiment, an initial value of the first counter is a positive integer.

In one embodiment, a value of the first counter is a non-negative integer.

In one embodiment, the first threshold is configured by an IE.

In one embodiment, the first threshold is configured by a higher-layer parameter.

In one embodiment, a higher-layer parameter configuring the first threshold comprise all or partial information in a beamFailureInstanceMaxCount field of a RadioLinkMonitoringConfig IE.

In one embodiment, a higher layer of the first node initialize the first counter as 0.

In one embodiment, when a beam failure event indication of physical layer of the first node is received, a higher layer of the first node starts or restarts a first timer, and increases the first counter by 1.

In one embodiment, the first timer is beamFailureDetectionTimer.

In one embodiment, if the first timer expires, the first counter is cleared.

In one embodiment, an initial value of the first timer is a positive integer.

In one embodiment, an initial value of the first timer is a positive real number.

In one embodiment, a unit for measurement of an initial value of the first timer is Q_{out,LR} reporting period of a beam failure detection RS.

In one embodiment, an initial value of the first timer is configured by a higher-layer parameter beamFailureDetectionTimer.

In one embodiment, an initial value of the first timer is configured by an IE.

In one embodiment, a name of IE configuring an initial value of the first timer comprises RadioLinkMonitoring.

In one embodiment, when the first timer expires, the first counter is cleared.

In one embodiment, when a random access procedure corresponding to the first signal successfully ends, the first counter is cleared.

In one embodiment, when the first node receives a first PDCCH, the first counter is cleared; where the first signal comprises a BFR MAC CE or a truncated BFR MAC CE, a HARQ process number corresponding to the first signal is a first HARQ process number; the first PDCCH indicates a UL grant of a new transmission corresponding to the first HARQ process number, and a CRC of the first PDCCH is scrambled by a Cell-Radio Network Temporary Identifier (C-RNTI).

In one embodiment, when the first condition is satisfied, a physical layer of the first node receives a third information block of a higher layer of the first node; herein, the third information block triggers a transmission of the first signal.

In one embodiment, the third information block indicates the second reference signal.

In one embodiment, after receiving a request from a higher layer, a physical layer of the first node transmits a fourth information block to a higher layer of the first node; herein, the fourth information block indicates M0 reference signal(s) and M0 second-type receiving quality, any of the M0 reference signal(s) is one of the M reference signals, M0 being a positive integer not greater than M, and measurement(s) performed on the M0 reference signal(s) is(are respectively) used to determine the M0 second-type receiving quality; any of the M0 second-type receiving quality is not worse than the third threshold.

In one embodiment, M0 is equal to 1.

In one embodiment, M0 is greater than 1.

In one embodiment, the M0 reference signal(s) comprises(comprise) the second reference signal.

In one embodiment, a physical layer of the first node receives a fifth information block of higher layer of the first node; herein, the fifth information block indicates the second reference signal.

In one embodiment, a higher layer of the first node selects the second reference signal from the M0 reference signal(s).

In one embodiment, the first counter is maintained by the first node.

In one embodiment, the meaning of the phrase that a measurement performed on the first reference signal group is used to judge whether the first condition is satisfied comprises: a measurement performed on the first reference signal group is used to judge whether a value of the first counter is increased by 1.

In one embodiment, the meaning of the phrase that a measurement performed on the first reference signal group is used to judge whether the first condition is satisfied comprises: a measurement performed on the first reference signal group is used to judge whether the third condition is satisfied.

In one embodiment, the first radio resource group comprises Physical Random Access CHannel (PRACH) resources.

In one embodiment, the first radio resource group comprises at least PRACH resources in PRACH resources or radio resources occupied by a PUSCH scheduled by a Random Access Response (RAR) UL grant.

In one embodiment, the first radio resource group comprises at least radio resources occupied by Msgl of radio resources occupied by Msgl or radio resources occupied by Msg3 PUSCH.

In one embodiment, the first radio resource group comprises at least radio resources occupied by Msgl in radio resources occupied by Msgl or radio resources occupied by a PUSCH scheduled by an RAR UL grant.

In one embodiment, the first radio resource group comprises radio resources occupied by Msgl and radio resources occupied by Msg3 PUSCH.

In one embodiment, the first radio resource group comprises radio resources occupied by Msgl or radio resources occupied by PUSCH scheduled by an RAR UL grant.

In one embodiment, the first radio resource group comprises radio resources occupied by MsgA.

In one embodiment, the first radio resource group comprises time-frequency resources.

In one embodiment, the first radio resource group comprise time-frequency resources and code-domain resources.

In one embodiment, a radio resource comprises time-frequency resources, and a radio resource group comprises time-frequency resources.

In one embodiment, a radio resource comprises time-frequency resources and code-domain resources, and a radio resource group comprises time-frequency resources and code-domain resources.

In one embodiment, the first radio resource group is configured by a higher-layer parameter.

In one embodiment, a higher-layer parameter configuring the first radio resource group comprises all or partial information in a candidateBeamRSList field in a BeamFailureRecoveryConfig IE.

In one embodiment, the M reference signals respectively correspond to M radio resource groups, and the first radio resource group is a radio resource group corresponding to the first reference signal among the M radio resource groups.

In one embodiment, the M reference signals respectively correspond to M radio resource groups, and the first radio resource group is a radio resource group corresponding to the second reference signal among the M radio resource groups.

In one embodiment, the first reference signal subset comprises M1 reference signal(s), the M1 reference signal(s) corresponds(respectively correspond) to M1 radio resource group(s), the first radio resource group is a radio resource group corresponding to the first reference signal among the M1 radio resource group(s), M1 being a positive integer less than M.

In one embodiment, the first reference signal subset comprises M1 reference signal(s), the M1 reference signal(s) corresponds(respectively correspond) to M1 radio resource group(s), the first radio resource group is a radio resource group corresponding to the second reference signal among the M1 radio resource group(s), M1 being a positive integer less than M.

In one embodiment, any reference signal in the second reference signal subset corresponds to one of the M1 radio resource group(s).

In one embodiment, the meaning of a given reference signal corresponding to a given radio resource group comprises: the given reference signal is used to determine a spatial-domain relation of the given radio resource group.

In one embodiment, the meaning of a given reference signal corresponding to a given radio resource group comprises: the given radio resource group is used to determine the reference signal.

In one embodiment, the meaning of a given reference signal corresponding to a given radio resource group comprises: the given radio resource group is used to indicate the reference signal.

In one embodiment, the meaning of a given reference signal corresponding to a given radio resource group comprises: a higher-layer signaling configures a corresponding relation between the given reference signal and the given radio resource group.

### Embodiment 2

Embodiment 2 illustrates a schematic diagram of a network architecture according to one embodiment of the present application, as shown in FIG. 2.

FIG. 2 is a diagram illustrating a network architecture 200 of Long-Term Evolution (LTE), Long-Term Evolution Advanced (LTE-A) and future 5G systems. The LTE, LTE-Aand future 5G systems network architecture 200 may be called an Evolved Packet System (EPS) 200. The 5G NR or LTE network architecture 200 may be called a 5G System (5GS)/Evolved Packet System (EPS) 200 or other appropriate terms. The 5GS/ EPS 200 may comprise one or more UEs 201, a UE 241 that is in Sidelink communications with a UE 201, an NG-RAN 202, a 5G-Core Network/Evolved Packet Core (5GC/ EPC) 210, a Home Subscriber Server (HSS)/ Unified Data Management (UDM) 220 and an Internet Service 230. The 5GS/EPS 200 may be interconnected with other access networks. For simple description, the entities/interfaces are not shown. As shown in FIG. 2, the 5GS/EPS 200 provides packet switching services. Those skilled in the art will find it easy to understand that various concepts presented throughout the present application can be extended to networks providing circuit switching services. The NG-RAN 202 comprises an NR node B (gNB) 203 and other gNBs 204. The gNB 203 provides UE 201-oriented user plane and control plane protocol terminations. The gNB 203 may be connected to other gNBs 204 via an Xn interface (for example, backhaul). The gNB 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB 203 provides an access point of the 5GC/EPC 210 for the UE 201. Examples of the UE 201 include cellular phones, smart phones, Session Initiation Protocol (SIP) phones, laptop computers, Personal Digital Assistant (PDA), Satellite Radios, Global Positioning Systems (GPSs), multimedia devices, video devices, digital audio players (for example, MP3 players), cameras, game consoles, unmanned aerial vehicles (UAV), aircrafts, narrow-band physical network devices, machine-type communication devices, land vehicles, automobiles, wearable devices, or any other devices having similar functions. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB 203 is connected to the 5GC/EPC 210 via an S1/NG interface. The 5GC/EPC 210 comprises a Mobility Management Entity (MME)/ Authentication Management Field (AMF)/ Session Management Function (SMF) 211, other MMEs/ AMFs/ SMFs 214, a Service Gateway (S-GW)/ User Plane Function (UPF) 212 and a Packet Date Network Gateway (P-GW)/UPF 213. The MME/AMF/SMF 211 is a control node for processing a signaling between the UE 201 and the 5GC/EPC 210. Generally, the MME/AMF/SMF 211 provides bearer and connection management. All user Internet Protocol (IP) packets are transmitted through the S-GW/UPF 212, the S-GW/UPF 212 is connected to the P-GW/UPF 213. The P-GW provides UE IP address allocation and other functions. The P-GW/UPF 213 is connected to the Internet Service 230. The Internet Service 230 comprises IP services corresponding to operators, specifically including Internet, Intranet, IP Multimedia Subsystem (IMS) and Packet Switching Services.

In one embodiment, the first node in the present application comprises the UE 201.

In one embodiment, the first node in the present application comprises the UE 241.

In one embodiment, the second node in the present application comprises the gNB 203.

In one embodiment, the third node in the present application comprises the gNB 204.

### Embodiment 3

Embodiment 3 illustrates a schematic diagram of a radio protocol architecture of a user plane and a control plane according to one embodiment of the present application, as shown in FIG. 3.

Embodiment 3 illustrates a schematic diagram of an example of a radio protocol architecture of a user plane and a control plane according to one embodiment of the present application, as shown in FIG. 3. FIG. 3 is a schematic diagram illustrating an embodiment of a radio protocol architecture of a user plane 350 and a control plane 300. In FIG. 3, the radio protocol architecture for a first communication node (UE, gNB or an RSU in V2X) and a second communication node (gNB, UE or an RSU in V2X), or between two UEs is represented by three layers, which are a layer 1, a layer 2 and a layer 3, respectively. The layer 1 (L1) is the lowest layer and performs signal processing functions of various PHY layers. The L1 is called PHY 301 in the present application. The layer 2 (L2) 305 is above the PHY 301, and is in charge of a link between a first communication node and a second communication node, or between two UEs. L2 305 comprises a Medium Access Control (MAC) sublayer 302, a Radio Link Control (RLC) sublayer 303 and a Packet Data Convergence Protocol (PDCP) sublayer 304. All the three sublayers terminate at the second communication node. The PDCP sublayer 304 provides multiplexing among variable radio bearers and logical channels. The PDCP sublayer 304 provides security by encrypting a packet and provides support for a first communication node handover between second communication nodes. The RLC sublayer 303 provides segmentation and reassembling of a higher-layer packet, retransmission of a lost packet, and reordering of a data packet so as to compensate the disordered receiving caused by HARQ. The MAC sublayer 302 provides multiplexing between a logical channel and a transport channel. The MAC sublayer 302 is also responsible for allocating between first communication nodes various radio resources (i.e., resource block) in a cell. The MAC sublayer 302 is also in charge of HARQ operation. The Radio Resource Control (RRC) sublayer 306 in layer 3 (L3) of the control plane 300 is responsible for acquiring radio resources (i.e., radio bearer) and configuring the lower layer with an RRC signaling between a second communication node and a first communication node device. The radio protocol architecture of the user plane 350 comprises layer 1 (L1) and layer 2 (L2). In the user plane 350, the radio protocol architecture for the first communication node and the second communication node is almost the same as the corresponding layer and sublayer in the control plane 300 for physical layer 351, PDCP sublayer 354, RLC sublayer 353 and MAC sublayer 352 in L2 layer 355, but the PDCP sublayer 354 also provides a header compression for a higher-layer packet so as to reduce a radio transmission overhead. The L2 layer 355 in the user plane 350 also includes Service Data Adaptation Protocol (SDAP) sublayer 356, which is responsible for the mapping between QoS flow and Data Radio Bearer (DRB) to support the diversity of traffic. Although not described in FIG. 3, the first communication node may comprise several higher layers above the L2 layer 355, such as a network layer (e.g., IP layer) terminated at a P-GW of the network side and an application layer terminated at the other side of the connection (e.g., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.

In one embodiment, the radio protocol architecture in FIG. 3 is applicable to the third node in the present application.

In one embodiment, the first information group is generated at the RRC sublayer 306.

In one embodiment, the first information group is generated at the MAC sublayer 302 or the MAC sublayer 352.

In one embodiment, the first reference signal group is generated at the PHY 301 or the PHY 351.

In one embodiment, the M reference signals are generated at the PHY 301 or the PHY 351.

In one embodiment, the first signal is generated at the PHY 301 or the PHY 351.

In one embodiment, the first signal is generated at the MAC sublayer 302 or the MAC sublayer 352.

In one embodiment, the second signal is generated by the PHY 301 or the PHY 351.

In one embodiment, the second signal is generated at the MAC sublayer 302 or the MAC sublayer 352.

### Embodiment 4

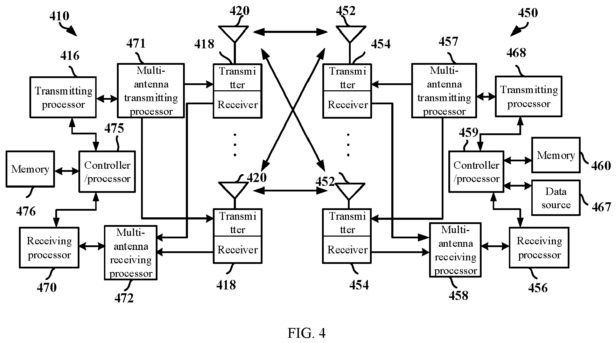

Embodiment 4 illustrates a schematic diagram of a first communication device and a second communication device according to one embodiment of the present application, as shown in FIG. 4. FIG. 4 is a block diagram of a first communication device 410 in communication with a second communication device 450 in an access network.

The first communication device 410 comprises a controller/ processor 475, a memory 476, a receiving processor 470, a transmitting processor 416, a multi-antenna receiving processor 472, a multi-antenna transmitting processor 471, a transmitter/ receiver 418 and an antenna 420.

The second communication device 450 comprises a controller/ processor 459, a memory 460, a data source 467, a transmitting processor 468, a receiving processor 456, a multi-antenna transmitting processor 457, a multi-antenna receiving processor 458, a transmitter/receiver 454 and an antenna 452.

In a transmission from the first communication device 410 to the second communication device 450, at the first communication device 410, a higher layer packet from the core network is provided to a controller/ processor 475. The controller/processor 475 provides a function of the L2 layer. In DL transmission, the controller/processor 475 provides header compression, encryption, packet segmentation and reordering, and multiplexing between a logical channel and a transport channel, and radio resource allocation for the second communication device 450 based on various priorities. The controller/processor 475 is also in charge of HARQ operation, retransmission of a lost packet, and a signaling to the second communication node 450. The transmitting processor 416 and the multi-antenna transmitting processor 471 perform various signal processing functions used for the L1 layer (that is, PHY). The transmitting processor 416 performs coding and interleaving so as to ensure an FEC (Forward Error Correction) at the second communication device 450, and the mapping to signal clusters corresponding to each modulation scheme (i.e., BPSK, QPSK, M-PSK, M-QAM, etc.). The multi-antenna transmitting processor 471 performs digital spatial precoding, including codebook-based precoding and non-codebook-based precoding, and beamforming on encoded and modulated symbols to generate one or more parallel streams. The transmitting processor 416 then maps each parallel stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multi-carrier symbol streams. After that the multi-antenna transmitting processor 471 performs transmission analog precoding/beamforming on the time-domain multi-carrier symbol streams. Each transmitter 418 converts a baseband multicarrier symbol stream provided by the multi-antenna transmitting processor 471 into a radio frequency (RF) stream. Each radio frequency stream is later provided to different antennas 420.

In a transmission from the first communication device 410 to the second communication device 450, at the second communication device 450, each receiver 454 receives a signal via a corresponding antenna 452. Each receiver 454 recovers information modulated to the RF carrier, converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs receiving analog precoding/beamforming on a baseband multicarrier symbol stream from the receiver 454. The receiving processor 456 converts the baseband multicarrier symbol stream after receiving the analog precoding/beamforming from time domain into frequency domain using FFT. In frequency domain, a physical layer data signal and a reference signal are de-multiplexed by the receiving processor 456, wherein the reference signal is used for channel estimation, while the data signal is subjected to multi-antenna detection in the multi-antenna receiving processor 458 to recover any second communication device 450-targeted parallel stream. Symbols on each parallel stream are demodulated and recovered in the receiving processor 456 to generate a soft decision. Then the receiving processor 456 decodes and de-interleaves the soft decision to recover the higher-layer data and control signal transmitted on the physical channel by the first communication node 410. Next, the higher-layer data and control signal are provided to the controller/processor 459. The controller/processor 459 performs functions of the L2 layer. The controller/processor 459 can be connected to a memory 460 that stores program code and data. The memory 460 can be called a computer readable medium. In downlink(DL) transmission, the controller/processor 459 provides demultiplexing between a transport channel and a logical channel, packet reassembling, decryption, header decompression and control signal processing so as to recover a higher-layer packet from the core network. The higher-layer packet is later provided to all protocol layers above the L2 layer, or various control signals can be provided to the L3 layer for processing. The controller/processor 459 also performs error detection using ACK and/or NACK protocols as a way to support HARQ operation.

In a transmission from the second communication device 450 to the first communication device 410, at the second communication device 450, the data source 467 is configured to provide a higher-layer packet to the controller/processor 459. The data source 467 represents all protocol layers above the L2 layer. Similar to a transmitting function of the first communication device 410 described in DL transmission, the controller/processor 459 performs header compression, encryption, packet segmentation and reordering, and multiplexing between a logical channel and a transport channel based on radio resource allocation of the first communication device 410 so as to provide the L2 layer functions used for the user plane and the control plane. The controller/processor 459 is also responsible for HARQ operation, retransmission of a lost packet, and a signaling to the first communication device 410. The transmitting processor 468 performs modulation mapping and channel coding. The multi-antenna transmitting processor 457 implements digital multi-antenna spatial precoding, including codebook-based precoding and non-codebook-based precoding, as well as beamforming. Following that, the generated parallel streams are modulated into multicarrier/single-carrier symbol streams by the transmitting processor 468, and then modulated symbol streams are subjected to analog precoding/beamforming in the multi-antenna transmitting processor 457 and provided from the transmitters 454 to each antenna 452. Each transmitter 454 first converts a baseband symbol stream provided by the multi-antenna transmitting processor 457 into a radio frequency symbol stream, and then provides the radio frequency symbol stream to the antenna 452.

In the transmission from the second communication device 450 to the first communication device 410, the function of the first communication device 410 is similar to the receiving function of the second communication device 450 described in the transmission from the first communication device 410 to the second communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and multi-antenna receiving processor 472 collectively provide functions of the L1 layer. The controller/processor 475 provides functions of the L2 layer. The controller/processor 475 can be connected with the memory 476 that stores program code and data. The memory 476 can be called a computer readable medium. the controller/processor 475 provides demultiplexing between a transport channel and a logical channel, packet reassembling, decryption, header decompression, control signal processing so as to recover a higher-layer packet from the second communication device 450. The higher-layer packet coming from the controller/processor 475 may be provided to the core network. The controller/processor 475 can also perform error detection using ACK and/or NACK protocols to support HARQ operation.

In one embodiment, the second communication device 450 comprises at least one processor and at least one memory. The at least one memory comprises computer program codes; the at least one memory and the computer program codes are configured to be used in collaboration with the at least one processor. The second communication device 450 at least: receives a first information group; receives a first reference signal group; and when a first condition is satisfied, transmits a first signal in a first radio resource group; herein, the first information group is used to indicate the first reference signal group, and a measurement performed on the first reference signal group is used to judge whether the first condition is satisfied; whether the first condition is satisfied is used to determine whether the first signal is transmitted; the first signal is used to determine a second reference signal, and the second reference signal is one of M reference signals, M being a positive integer greater than 1; the first condition comprises that a value of a first counter is not less than a first threshold; a first reference signal is used to determine a spatial-domain relation of the first radio resource group; whether the first reference signal and the second reference signal are QCL is related to whether the second reference signal belongs to a first reference signal subset or belongs to a second reference signal subset; when the second reference signal belongs to the first reference signal subset, the first reference signal and the second reference signal are QCL; when the second reference signal belongs to the second reference signal subset, the first reference signal and the second reference signal are not QCL; the first threshold is a positive integer, and the first reference signal subset and the second reference signal subset are respectively subsets of the M reference signals; the first information group comprises a positive integer number of information block(s).

In one embodiment, the second communication device 450 comprises a memory that stores a computer readable instruction program. The computer readable instruction program generates an action when executed by at least one processor. The action includes: receiving a first information group; receiving a first reference signal group; and when a first condition is satisfied, transmitting a first signal in a first radio resource group; herein, the first information group is used to indicate the first reference signal group, and a measurement performed on the first reference signal group is used to judge whether the first condition is satisfied; whether the first condition is satisfied is used to determine whether the first signal is transmitted; the first signal is used to determine a second reference signal, and the second reference signal is one of M reference signals, M being a positive integer greater than 1; the first condition comprises that a value of a first counter is not less than a first threshold; a first reference signal is used to determine a spatial-domain relation of the first radio resource group; whether the first reference signal and the second reference signal are QCL is related to whether the second reference signal belongs to a first reference signal subset or belongs to a second reference signal subset; when the second reference signal belongs to the first reference signal subset, the first reference signal and the second reference signal are QCL; when the second reference signal belongs to the second reference signal subset, the first reference signal and the second reference signal are not QCL; the first threshold is a positive integer, and the first reference signal subset and the second reference signal subset are respectively subsets of the M reference signals; the first information group comprises a positive integer number of information block(s).

In one embodiment, the first communication device 410 comprises at least one processor and at least one memory. The at least one memory comprises computer program codes; the at least one memory and the computer program codes are configured to be used in collaboration with the at least one processor. The first communication device 410 at least: transmits a first information group; transmits a first reference signal sub-group; and monitors a first signal in a first radio resource group; herein, the first information group is used to indicate a first reference signal group, and any reference signal in the first reference signal sub-group belongs to the first reference signal group; a measurement performed on the first reference signal group is used to judge whether a first condition is satisfied; whether the first condition is satisfied is used to determine whether the first signal is transmitted; the first signal is used to determine a second reference signal, and the second reference signal is one of M reference signals, M being a positive integer greater than 1; the first condition comprises that a value of a first counter is not less than a first threshold; a first reference signal is used to determine a spatial-domain relation of the first radio resource group; whether the first reference signal and the second reference signal are QCL is related to whether the second reference signal belongs to a first reference signal subset or belongs to a second reference signal subset; when the second reference signal belongs to the first reference signal subset, the first reference signal and the second reference signal are QCL; when the second reference signal belongs to the second reference signal subset, the first reference signal and the second reference signal are not QCL; the first threshold is a positive integer, and the first reference signal subset and the second reference signal subset are respectively subsets of the M reference signals; the first information group comprises a positive integer number of information block(s), the first reference signal group comprises a positive integer number of reference signal(s), and the first reference signal sub-group comprises a positive integer number of reference signal(s).

In one embodiment, the first communication device 410 comprises a memory that stores a computer readable instruction program. The computer readable instruction program generates an action when executed by at least one processor. The action includes: transmitting a first information group; transmitting a first reference signal sub-group; and motoring a first signal in a first radio resource group; herein, the first information group is used to indicate a first reference signal group, and any reference signal in the first reference signal sub-group belongs to the first reference signal group; a measurement performed on the first reference signal group is used to judge whether a first condition is satisfied; whether the first condition is satisfied is used to determine whether the first signal is transmitted; the first signal is used to determine a second reference signal, and the second reference signal is one of M reference signals, M being a positive integer greater than 1; the first condition comprises that a value of a first counter is not less than a first threshold; a first reference signal is used to determine a spatial-domain relation of the first radio resource group; whether the first reference signal and the second reference signal are QCL is related to whether the second reference signal belongs to a first reference signal subset or belongs to a second reference signal subset; when the second reference signal belongs to the first reference signal subset, the first reference signal and the second reference signal are QCL; when the second reference signal belongs to the second reference signal subset, the first reference signal and the second reference signal are not QCL; the first threshold is a positive integer, and the first reference signal subset and the second reference signal subset are respectively subsets of the M reference signals; the first information group comprises a positive integer number of information block(s), the first reference signal group comprises a positive integer number of reference signal(s), and the first reference signal sub-group comprises a positive integer number of reference signal(s).

In one embodiment, the first node comprises the second communication device 450 in the present application.

In one embodiment, the second node in the present application comprises the first communication device 410.

In one embodiment, the third node in the present application comprises the first communication device 410.

In one embodiment, at least one of the antenna 452, the receiver 454, the receiving processor 456, the multi-antenna receiving processor 458, the controller/processor 459, the memory 460, or the data source 467 is used to receive the first information group in the present application; at least one of the antenna 420, the transmitter 418, the transmitting processor 416, the multi-antenna transmitting processor 471, the controller/processor 475, or the memory 476 is used to transmit the first information group in the present application.

In one embodiment, at least one of the antenna 452, the receiver 454, the receiving processor 456, the multi-antenna receiving processor 458, the controller/processor 459, the memory 460, or the data source 467 is used to receive the M configuration information blocks in the present application; at least one of the antenna 420, the transmitter 418, the transmitting processor 416, the multi-antenna transmitting processor 471, the controller/processor 475, or the memory 476 is used to transmit the M configuration information blocks in the present application.

In one embodiment, at least one of the antenna 452, the receiver 454, the receiving processor 456, the multi-antenna receiving processor 458, the controller/processor 459, the memory 460, or the data source 467 is used to receive the first reference signal group in the present application; at least one of the antenna 420, the transmitter 418, the transmitting processor 416, the multi-antenna transmitting processor 471, the controller/processor 475, or the memory 476 is used to transmit the first reference signal group of the present application.

In one embodiment, at least one of the antenna 452, the receiver 454, the receiving processor 456, the multi-antenna receiving processor 458, the controller/processor 459, the memory 460, or the data source 467 is used to receive the M reference signals in the present application; at least one of the antenna 420, the transmitter 418, the transmitting processor 416, the multi-antenna transmitting processor 471, the controller/processor 475, or the memory 476 is used to transmit the M reference signals in the present application.

In one embodiment, at least one of the antenna 452, the receiver 454, the receiving processor 456, the multi-antenna receiving processor 458, the controller/processor 459, the memory 460, or the data source 467 is used to monitor the response for the first signal in the first time window in the present application; at least one of the antenna 420, the receiver 418, the receiving processor 416, the multi-antenna transmitting processor 471, the controller/processor 475, or the memory 476 is used to transmit the response for the first signal in the first time window in the present application.

In one embodiment, at least one of the antenna 452, the receiver 454, the receiving processor 456, the multi-antenna receiving processor 458, the controller/processor 459, the memory 460, or the data source 467 is used to monitor the response for the second signal in the second time window in the present application; at least one of the antenna 420, the transmitter 418, the transmitting processor 416, the multi-antenna transmitting processor 471, the controller/processor 475, or the memory 476 is used to transmit the response for the second signal in the second time window in the present application.

In one embodiment, at least one of the antenna 452, the transmitter 454, the transmitting processor 468, the multi-antenna transmitting processor 457, the controller/processor 459, or the memory 460 is used to transmit the first signal in the first radio resource group in the present application; at least one of the antenna 420, the receiver 418, the receiving processor 470, the multi-antenna receiving processor 472, the controller/processor 475, or the memory 476 is used to receive the first signal in the first radio resource group in the present application.

In one embodiment, at least one of the antenna 452, the transmitter 454, the transmitting processor 468, the multi-antenna transmitting processor 457, the controller/processor 459, or the memory 460 is used to transmit the second signal in the second radio resource group in the present application; at least one of the antenna 420, the receiver 418, the receiving processor 470, the multi-antenna receiving processor 472, the controller/processor 475, or the memory 476 is used to receive the second signal in the second radio resource group in the present application.

### Embodiment 5

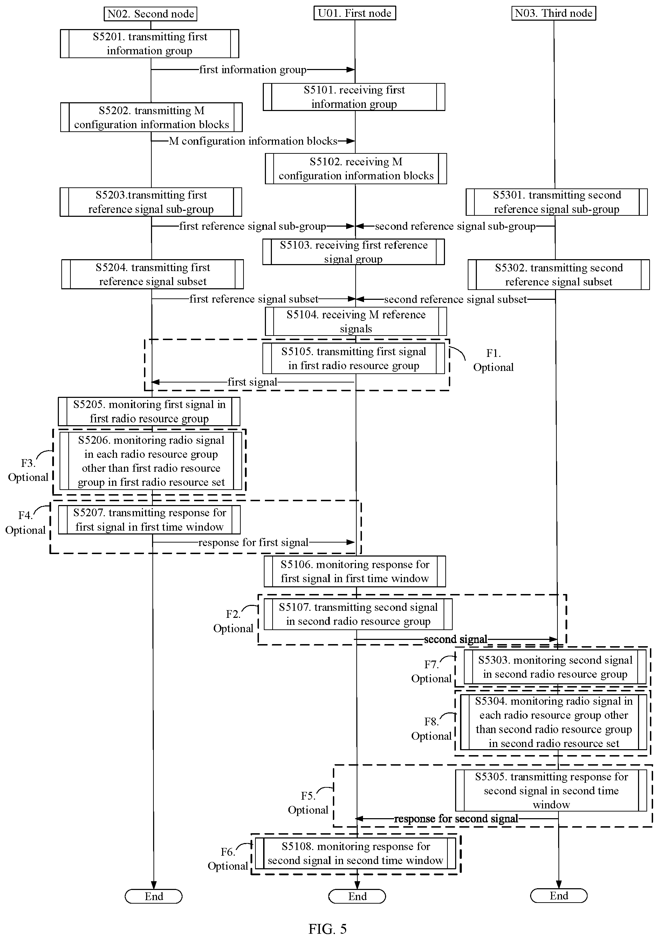

Embodiment 5 illustrates a flowchart of wireless transmission according to one embodiment in the present application, as shown in FIG. 5. In FIG. 5, a first node U01, a second node N02 and a third node N03 are communication nodes transmitted in pairs via an air interface. In FIG. 5, each step in block F1 to block F8 is optional.
**The first node U01** receives a first information group in step S5101; receives M configuration information groups in step S5102; receives a first reference signal group in step S5103; receives M reference signals in step S5104; transmits a first signal in a first radio resource group in step S5105; monitors a response for a first signal in a first time window in step S5106; transmits a second signal in a second radio resource group in step S5107; and monitors a response for a second signal in a second time window in step S5108;
**The second node N02** transmits a first information group in step S5201; transmits M configuration information blocks in step S5202; transmits a first reference signal sub-group in step S5203; transmits a first reference signal subset in step S5204; monitors a first signal in a first radio resource group in step S5205; monitors a radio signal in each radio resource group other than a first radio resource group in a first radio resource set in step S5206; transmits a response for a first signal in a first time window in step S5207;
**The third node N03** transmits a second reference signal sub-group in step S5301; transmits a second reference signal subset in step S5302; and monitors a second signal in a second radio resource group in step S5303; monitors a radio signal in each radio resource group other than a second radio resource group in a second radio resource set in step S5304; and transmits a response for a second signal in a second time window in step S5305.

In embodiment 5, the first information group is used to indicate the first reference signal group, a measurement performed by the first node U01 on the first reference signal group is used by the first node U01 to judge whether the first condition is satisfied; whether the first condition is satisfied is used by the first node U01 to determine whether the first signal is transmitted; the first signal is used to determine a second reference signal, and the second reference signal is one of M reference signals, M being a positive integer greater than 1; the first condition comprises that a value of a first counter is not less than a first threshold; a first reference signal is used to determine a spatial-domain relation of the first radio resource group; whether the first reference signal and the second reference signal are QCL is related to whether the second reference signal belongs to a first reference signal subset or belongs to a second reference signal subset; when the second reference signal belongs to the first reference signal subset, the first reference signal and the second reference signal are QCL; when the second reference signal belongs to the second reference signal subset, the first reference signal and the second reference signal are not QCL; the first threshold is a positive integer, and the first reference signal subset and the second reference signal subset are respectively subsets of the M reference signals; the first information group comprises a positive integer number of information block(s); the second signal is used to determine the second reference signal, a third reference signal is used to determine a spatial-domain relation of the second radio resource group, and the second reference signal and the third reference signal are QCL; any reference signal in the first reference signal sub-group belongs to the first reference signal group. The first radio resource group is any radio resource group in the first radio resource set, and the first signal is a radio signal being monitored by the second node N02 in the first radio resource group. Any reference signal in the second reference signal sub-group belongs to a first reference signal group. The second radio resource group is any radio resource group in the second radio resource set, and the second signal is a radio signal being monitored by the third node N03 in the second radio resource group.

In one embodiment, the non-serving cell in the present application can be used to transmit data.

In one embodiment, the non-serving cell in the present application can be used to transmit a radio signal.

In one embodiment, the non-serving cell in the present application can be used to transmit a reference signal.

In one embodiment, a non-serving cell in the present application refers to a cell that can be selected for transmitting and receiving data.

In one embodiment, a non-serving cell in the present application refers to a cell that can be selected for transmitting and receiving a radio signal.

In one embodiment, a non-serving cell in the present application refers to a cell that can be selected for transmitting and receiving a reference signal.

In one embodiment, when a first condition is satisfied, the first node U01 transmits the first signal in the first radio resource group, the box F1 exists.

In one embodiment, when the first condition is satisfied and the second reference signal belongs to the second reference signal subset, the first node U01 transmits a second signal in a second radio resource group, and the box F2 exists.

In one embodiment, when both the first condition and a second condition are satisfied and the second reference signal belongs to the second reference signal subset, the first node U01 transmits a second signal in a second radio resource group, and the box F2 exists.

In one embodiment, when the second node N02 detects the first signal in the first radio resource group, the second node N02 transmits a response for a first signal in a first time window, and the box F4 exists.

In one embodiment, when the third node detects the second signal in the second radio resource group, the third node N03 transmits a response for a second signal in a second time window, and the box F5 exists.

In one embodiment, a necessary condition for the existence of the box F5 comprise: the boxes F2 and F7 exist.

In one embodiment, a necessary condition for the existence of the box F6 comprise: the box F2 exists.

In one embodiment, the behavior of transmitting a second signal in a second radio resource group is earlier than the behavior of monitoring a response for a first signal in a first time window.

In one embodiment, the behavior of transmitting a second signal in a second radio resource group is not later than the behavior of monitoring a response for a first signal in a first time window.

In one embodiment, the behavior of transmitting a second signal in a second radio resource group is later than the behavior of monitoring a response for a first signal in a first time window.

In one embodiment, the first information group is used by the first node U01 to indicate the first reference signal group.

In one embodiment, the first signal is used by the first node U01 to determine a second reference signal.

In one embodiment, a first reference signal is used by the first node U01 to determine a spatial-domain relation of the first radio resource group.

In one embodiment, the second signal is used by the first node U01 to determine the second reference signal.

In one embodiment, a third reference signal is used by the first node U01 to determine a spatial-domain relation of the second radio resource group.

In one embodiment, the first information group is used by the second node N02 to indicate the first reference signal group.

In one embodiment, the first signal is used by the second node N02 to determine a second reference signal.

In one embodiment, a first reference signal is used by the second node N02 to determine a spatial-domain relation of the first radio resource group.

In one embodiment, the second signal is used by the second node N02 to determine the second reference signal.

In one embodiment, a third reference signal is used by the second node N02 to determine a spatial-domain relation of the second radio resource group.

In one embodiment, the first information group is used by the third node N03 to indicate the first reference signal group.

In one embodiment, the first signal is used by the third node N03 to determine a second reference signal.

In one embodiment, a first reference signal is used by the third node N03 to determine a spatial-domain relation of the first radio resource group.

In one embodiment, the second signal is used by the third node N03 to determine the second reference signal.

In one embodiment, a third reference signal is used by the third node N03 to determine a spatial-domain relation of the second radio resource group.

In one embodiment, when a third condition is satisfied, a value of the first counter is increased by 1; the third condition comprises: each first-type receiving quality in a first-type receiving quality group is worse than the second threshold; a measurement performed on the first reference signal group is used by the first node to determine the first-type receiving quality group.

In one embodiment, when each first-type receiving quality in the first-type receiving quality is less than the second threshold, the third condition is satisfied.

In one embodiment, when there exists a first-type receiving quality in the first-type receiving quality group being not less than the second threshold, the third condition is not satisfied.

In one embodiment, when the third condition is satisfied, a physical layer of the first node transmits a beam failure instance indication to higher layer of the first node.

In one embodiment, whether the third condition is satisfied is used by the first node to determine whether a value of the first counter is increased by 1.

In one embodiment, a number of reference signal(s) comprised in the first reference signal group is equal to a number of first-type receiving quality comprised in the first-type receiving quality group.

In one embodiment, the first reference signal group only comprises one reference signal, the first type receiving quality group only comprises one first-type receiving quality, and a measurement performed on the one reference signal is used to determine the one first-type receiving quality.

In one embodiment, the first reference signal group comprises S reference signals, the first-type receiving quality group comprises S first-type receiving quality, S being a positive integer greater than 1; measurements performed on the S reference signals are respectively used to determine the S first-type receiving qualities.

In one embodiment, for any given reference signal in the first reference signal group, a measurement performed on the given reference signal in a first time interval is used to determine a first-type receiving quality corresponding to the given reference signal.

In one embodiment, for any given reference signal in the first reference signal group, the first node acquires a measurement used to calculate a first-type receiving quality corresponding to the given reference signal only according to the received given reference signal within a first time interval.

In one embodiment, the measurement comprises a channel measurement.

In one embodiment, the measurement comprises an interference measurement.

In one embodiment, the first time interval is a continuous duration.

In one embodiment, a length of the first time interval is T_{Evaluate_BFD_SSB} ms or T_{Evaluate_BFD_CSI-RS} ms.

In one embodiment, for the definition of T_{Evaluate_BFD_SSB} and T_{Evaluate_BFD_CSI-RS}, refer to 3GPP TS38.133.

In one embodiment, any first-type receiving quality in the first-type receiving quality group is Reference Signal Received Power (RSRP).

In one embodiment, any first-type receiving quality in the first-type receiving quality group is L1-RSRP.

In one embodiment, any first-type receiving quality in the first-type receiving quality group is a Signal-to-noise and interference ratio (SINR).

In one embodiment, any first-type receiving quality in the first-type receiving quality group is L1-SINR.

In one embodiment, any first-type receiving quality in the first-type receiving quality group is a BLock Error Rate (BLER).

In one embodiment, a given receiving quality is one of RSRP, L1-RSRP, SINR or L1-SINR, and given receiving quality is any first-type receiving quality in the first-type receiving group; the meaning of the phrase that the given receiving quality is less than the second threshold comprises: the given receive quality is less than the second threshold; the meaning of the phrase that the given receiving quality is not less than the second threshold comprises: the given receive quality is not less than the second threshold.

In one embodiment, a given receiving quality is BLER, and given receiving quality is any first-type receiving quality in the first-type receiving group; the meaning of the phrase that the given receiving quality is less than the second threshold comprises: the given receive quality is greater than the second threshold; the meaning of the phrase that the given receiving quality is not less than the second threshold comprises: the given receive quality is not greater than the second threshold.

In one embodiment, any first-type receiving quality in the first-type receiving quality group is acquired by table looking-up RSRP, an L1-RSRP, an SINR or an L1-SINR of a corresponding reference signal.

In one embodiment, any first-type receiving quality in the first-type receiving quality group is acquired according to hypothetical PDCCH transmission parameters.

In one embodiment, for the specific meaning of the hypothetical PDCCH transmission parameters, refer to 3GPP TS38.133.

In one embodiment, the second threshold is a real number.

In one embodiment, the second threshold is a non-negative real number.

In one embodiment, the second threshold is a non-negative real number not greater than 1.

In one embodiment, the second threshold is one of Q_{out_L}, Q_{out_LR_SSB} or Q_{out_LR_CSI-RS}.

In one embodiment, for the specific meaning of the Q_{out_L}, Q_{out_LR_SSB} and Q_{out_LR_CSI-RS}, refer to 3GPP TS38.133.

In one embodiment, the second threshold is determined by a higher-layer parameter rlmInSyncOutOfSyncThreshold.

In one embodiment, a method in the first node comprises:
receiving the M reference signals;
herein, measurements performed on the M reference signals are respectively used to determine M second-type receiving quality; a second-type receiving quality corresponding to the second reference signal among the M second-type receiving quality is not worse than a third threshold.

In one embodiment, the M reference signals comprise a CSI-RS.

In one embodiment, the M reference signals comprise an SSB.

In one embodiment, the M reference signals comprise an SRS.

In one embodiment, any reference signal in the M reference signals comprises a CSI-RS or an SSB.

In one embodiment, the M reference signals are configured by higher-layer parameters.

In one embodiment, higher-layer parameters configuring the M reference signals comprise all or partial information in a candidateBeamRSList field in a BeamFailureRecoveryConfig IE.

In one embodiment, the M reference signals are configured by an IE.

In one embodiment, the M reference signals are configured by two IEs.

In one embodiment, a name of an IE used to configure the M reference signals comprises BeamFailureRecovery.

In one embodiment, a name of an IE used to configure the M reference signals comprises BeamFailure.

In one embodiment, a name of an IE used to configure the M reference signals comprises BF.

In one embodiment, M is equal to 2.

In one embodiment, M is greater than 2.

In one embodiment, any reference signal in the M reference signals is a periodic reference signal.

In one embodiment, any of the M reference signals is a periodic reference signal or a semi-persistent reference signal.

In one embodiment, there exists one of the M reference signals being a semi-persistent reference signal or an aperiodic reference signal.

In one embodiment, any two of the M reference signals belong to a same carrier in frequency domain.

In one embodiment, any two of the M reference signals belong to a same BWP in frequency domain.

In one embodiment, there exists two of the M reference signals belonging to different carriers in frequency domain.

In one embodiment, there exists two of the M reference signals belonging to different BWPs in frequency domain.

In one embodiment, the M reference signals consist of all reference signals in the first reference signal subset and the second reference signal subset.

In one embodiment, there exists a reference signal in the M reference signals not belonging to the first reference signal subset nor to the second reference signal subset.

In one embodiment, the first reference signal subset comprises at least one reference signal in the M reference signals, and the second reference signal subset comprises at least one reference signal in the M reference signals; any reference signal in the first reference signal subset does not belong to the second reference signal subset.

In one embodiment, the second reference signal belongs to the first reference signal subset or the second reference signal subset.

In one embodiment, a transmitter of the first reference signal subset is different from a transmitter of the second reference signal subset.

In one embodiment, the first reference signal subset is transmitted by a first cell, and the second reference signal subset is transmitted by a second cell.

In one embodiment, a transmitter of any reference signal in the first reference signal subset is a serving cell of the first node.

In one embodiment, a transmitter of any reference signal in the second reference signal subset is a non-serving cell of the first node.

In one embodiment, the first reference signal subset is configured by an IE.

In one embodiment, the second reference signal subset is configured by an IE.

In one embodiment, the first reference signal subset and the second reference signal subset are configured by a same IE.

In one embodiment, the first reference signal subset and the second reference signal subset are respectively configured by two IEs.

In one embodiment, a name of an IE used to configure the first reference signal subset comprises BeamFailureRecovery.

In one embodiment, a name of an IE used to configure the first reference signal subset comprises BeamFailure.

In one embodiment, a name of an IE used to configure the first reference signal subset comprises BF.

In one embodiment, a name of an IE used to configure the second reference signal subset comprises BeamFailureRecovery.

In one embodiment, a name of an IE used to configure the second reference signal subset comprises BeamFailure.

In one embodiment, a name of an IE used to configure the second reference signal subset comprises BF.

In one embodiment, the first reference signal subset is transmitted by an SpCell.

In one embodiment, the first reference signal subset is transmitted by a PCell.

In one embodiment, the second reference signal subset is transmitted by an SCell.

In one embodiment, the first reference signal subset corresponds to a first index, the second reference signal subset corresponds to a second index, and the first index and the second index are two different non-negative integers.

In one embodiment, a first index is used to determine the first reference signal subset, a second index is used to determine the second reference signal subset, and the first index and the second index are two different non-negative integers.

In one embodiment, the first index is used to indicate a first cell, and the second index is used to indicate a second cell.

In one embodiment, the first cell and the second cell are different.

In one embodiment, a name of the first index comprises set, and a name of the second index comprises set.

In one embodiment, a name of the first index comprises SET, and a name of the second index comprises SET.

In one embodiment, a name of the first index comprises CORESETPoolIndex, and a name of the second index comprises CORESETPoolIndex.

In one embodiment, a name of the first index comprises CORESET, and a name of the second index comprises CORESET.

In one embodiment, a name of the first index comprises coreset, and a name of the second index comprises coreset.

In one embodiment, a name of the first index comprises TRP, and a name of the second index comprises TRP.

In one embodiment, a name of the first index comprises cell, and a name of the second index comprises cell.

In one embodiment, a name of the first index comprises cell, and a name of the second index comprises cell.

In one embodiment, a name of the first index comprises tci, and a name of the second index comprises tci.

In one embodiment, a name of the first index comprises tci, and a name of the second index comprises tci.

In one embodiment, the spatial-domain relation comprises a Transmission Configuration Indicator (TCI) state.

In one embodiment, the spatial-domain relation comprises a Quasi co-location (QCL) parameter.

In one embodiment, the spatial-domain relation comprises a spatial domain filter.

In one embodiment, the spatial-domain relation comprises a spatial-domain transmission filter.

In one embodiment, the spatial-domain relation comprises Spatial-domain reception filter.

In one embodiment, the spatial-domain relation comprises Spatial Tx parameters.

In one embodiment, the spatial-domain relation comprises Spatial Rx parameters.

In one embodiment, the Spatial Tx parameters comprise one or more of a transmission antenna port, a transmission antenna port group, a transmission beam, a transmission analog beamforming matrix, a transmission analog beamforming vector, a transmission beamforming matrix, a transmission beamforming vector and a spatial-domain transmission filter.

In one embodiment, the Spatial Rx parameters comprise one or more of a reception beam, a reception analog beamforming matrix, a reception analog beamforming vector, a reception beamforming matrix, a reception beamforming vector and a spatial-domain reception filter.

In one embodiment, a given reference signal is used to determine a spatial-domain relation of a given radio resource group.

In one subembodiment of the above embodiment, the given reference signal is the first reference signal, and the given radio resource group is the first radio resource group.

In one subembodiment of the above embodiment, the given reference signal is the third reference signal, and the given radio resource group is the second radio resource group.

In one subembodiment of the above embodiment, a TCI state of the given reference signal is used to determine a spatial-domain relation of the given radio resource group.

In one subembodiment of the above embodiment, the spatial-domain relation comprises a TCI state, and a TCI state of the given reference signal is the same as a TCI state of the given radio resource group.

In one subembodiment of the above embodiment, QCL parameters of the given reference signal are used to determine a spatial-domain relation of the given radio resource group.

In one subembodiment of the above embodiment, the spatial-domain relation comprises QCL parameters, and QCL parameters of the given reference signal are the same as QCL parameters of the given radio resource group.

In one subembodiment of the above embodiment, spatial-domain filter of the given reference signal is used to determine spatial-domain relation of the given radio resource group.

In one subembodiment of the above embodiment, the spatial-domain relation comprises a spatial-domain filter, and spatial-domain filter of the given reference signal is the same as a spatial-domain filter of the given radio resource group.

In one subembodiment of the above embodiment, the spatial-domain relation comprises a spatial-domain transmission filter, the given reference signal is an uplink signal, and a spatial-domain transmission filter of the given reference signal is the same as a spatial-domain transmission filter of the given radio resource block.

In one subembodiment of the above embodiment, the spatial-domain relation comprises a spatial-domain transmission filter, the given reference signal is a downlink signal, and a spatial-domain reception filter of the given reference signal is the same as a spatial-domain transmission filter of the given radio resource block.

In one subembodiment of the above embodiment, the spatial-domain relation comprises a spatial-domain reception filter, the given reference signal is an uplink signal, and a spatial-domain reception filter of the given reference signal is the same as a spatial-domain reception filter of the given radio resource block.

In one subembodiment of the above embodiment, the spatial-domain relation comprises a spatial-domain reception filter, the given reference signal is a downlink signal, and a spatial-domain transmission filter of the given reference signal is the same as a spatial-domain reception filter of the given radio resource block.

In one subembodiment of the above embodiment, spatial parameters of the given reference signal are used to determine a spatial-domain relation of the given radio resource group.

In one subembodiment of the above embodiment, the spatial-domain relation comprises a Spatial Tx parameter, and a spatial parameter of the given reference signal is the same as a spatial transmission parameter of the given radio resource group.

In one subembodiment of the above embodiment, the spatial-domain relation comprises a Spatial Tx parameter, the given reference signal is an uplink signal, and a Spatial Tx parameter of the given reference signal is the same as a Spatial Tx parameter of the given radio resource group.

In one subembodiment of the above embodiment, the spatial-domain relation comprises a Spatial Tx parameter, the given reference signal is a downlink signal, and a Spatial Rx parameter of the given reference signal is the same as a Spatial Tx parameter of the given radio resource group.

In one subembodiment of the above embodiment, the spatial-domain relation comprises a Spatial Rx parameter, and a spatial parameter of the given reference signal is the same as a spatial reception parameter of the given radio resource group.

In one subembodiment of the above embodiment, the spatial-domain relation comprises a Spatial Rx parameter, the given reference signal is an uplink signal, and a Spatial Rx parameter of the given reference signal is the same as a Spatial Rx parameter of the given radio resource group.

In one subembodiment of the above embodiment, the spatial-domain relation comprises a Spatial Rx parameter, the given reference signal is a downlink signal, and a Spatial Tx parameter of the given reference signal is the same as a Spatial Rx parameter of the given radio resource group.

In one embodiment, the second node is a maintenance base station of a serving cell of the first node.

In one embodiment, the first reference signal subset is transmitted by the second node.

In one embodiment, the second node is not a maintenance base station of the second cell.

In one embodiment, when the second reference signal belongs to the second reference signal subset, the first cell transmits a third signal to the first node, and the third signal carries information related to the second cell.

In one embodiment, when the second reference signal belongs to the second reference signal subset, the first cell relays information related to the second cell to the first node.

In one embodiment, a method in the first node comprises:
receiving a third signal;
herein, the third signal comprises information related to the second cell.

In one embodiment, after transmitting the first signal, the first node receives the third signal.

In one embodiment, the information related to the second cell comprises at least one of a second index or a first identifier.

In one embodiment, the third signal comprises Msg4.

In one embodiment, the third signal comprises a Contention Resolution MAC PDU.

In one embodiment, a first identifier is a Cell-Radio Network Temporary Identifier (C -RNTI).

In one embodiment, the first identity is an RNTI.

In one embodiment, the first identifier is a non-negative integer.

In one embodiment, the second index is a non-negative integer.

In one embodiment, the second index is a CellIdentity of the second cell.

In one embodiment, the second index is a PhysCellId of the second cell.

In one embodiment, the first signal is used for a Beam Failure Request.

In one embodiment, the first signal comprises a baseband signal.

In one embodiment, the first signal comprises a radio signal.

In one embodiment, the first signal comprises a radio-frequency signal.

In one embodiment, the first signal comprises a first characteristic sequence.

In one embodiment, the first characteristic sequence comprises one or more of a pseudorandom sequence, a Zadoff-Chu sequence, or a low Peak-to-Average Power Ratio (PAPR) sequence.

In one embodiment, the first characteristic sequence comprises a Cyclic Prefix (CP).

In one embodiment, the first signal comprises a Random Access Preamble.

In one embodiment, the first signal comprises Uplink control information (UCI).

In one embodiment, the first signal comprises a Link Recovery Request (LRR).

In one embodiment, the first signal comprises a Medium Access Control layer Control Element (MAC CE).

In one embodiment, the first signal comprises a Beam Failure Recovery (BFR) MAC CE or a truncated BFR MAC CE.

In one embodiment, the first signal comprises at least the random access preamble of a random access preamble or a BFR MAC CE.

In one embodiment, when the second reference signal belongs to the second reference signal subset, the first signal comprises a first sub-signal and a second sub-signal, the first sub-signal comprises a random access preamble, and the second sub-signal comprises a BFR MAC CE or a truncated BFR MAC CE; when the second reference signal belongs to the first reference signal subset, the first signal comprises only the random access preamble in a random access preamble, a BFR MAC CE, and a truncated BFR MAC CE.

In one embodiment, the first signal comprises at least the random access preamble of a random access preamble or a truncated BFR MAC CE.

In one embodiment, the first signal comprises at least the random access preamble of a random access preamble or a MAC CE.

In one embodiment, when the second reference signal belongs to the second reference signal subset, the first signal comprises a first sub-signal and a second sub-signal, the first sub-signal comprises a random access preamble, and the second sub-signal comprises a MAC CE; when the second reference signal belongs to the first reference signal subset, the first signal comprises only the random access preamble in a random access preamble and a MAC CE.

In one embodiment, the first signal comprises at least Msgl in Msgl or a Msg3 PUSCH.

In one embodiment, when the second reference signal belongs to the second reference signal subset, the first signal comprises a first sub-signal and a second sub-signal, the first sub-signal comprises Msgl, and the second sub-signal comprises a Msg3 PUSCH; when the second reference signal belongs to the first reference signal subset, the first signal comprises only Msgl in Msgl and a Msg3 PUSCH.

In one embodiment, the first signal comprises Msgl and a Msg3 PUSCH.

In one embodiment, the first signal comprises at least Msgl in Msgl or a PUSCH scheduled by an RAR uplink grant.

In one embodiment, when the second reference signal belongs to the second reference signal subset, the first signal comprises a first sub-signal and a second sub-signal, the first sub-signal comprises Msgl, and the second sub-signal comprises a PUSCH scheduled by an RAR uplink grant; when the second reference signal belongs to the first reference signal subset, the first signal comprises only Msgl in Msgl and a PUSCH scheduled by an RAR uplink grant.

In one embodiment, the first signal comprises Msgl and a PUSCH scheduled by an RAR uplink grant.

In one embodiment, the first signal comprises MsgA.

In one embodiment, when the second reference signal belongs to the second reference signal subset, the first signal comprises the first sub-signal and the second sub-signal; when the second reference signal belongs to the second reference signal subset, the first signal comprises only the first sub-signal in the first sub-signal and the second sub-signal.

In one embodiment, the first radio resource group comprises a first radio resource block and a second radio resource block, the first signal comprises a first sub-signal and a second sub-signal, the first sub-signal is transmitted in the first radio resource block, and the second sub-signal is transmitted in the second radio resource block.

In one subembodiment of the above embodiment, the second reference signal belongs to only the second reference signal subset in the first reference signal subset and the second reference signal subset.

In one subembodiment of the above embodiment, the second reference signal belongs to the first reference signal subset or the second reference signal subset.

In one embodiment, the first sub-signal comprises Msgl, and the second sub-signal comprises a Msg3 PUSCH.

In one embodiment, the first sub-signal comprises Msgl, and the second sub-signal comprises a PUSCH scheduled by an RAR uplink grant.

In one embodiment, the first signal comprises MsgA, the first sub-signal comprises a random access preamble in MsgA, and the second sub-signal comprises a PUSCH in MsgA.

In one embodiment, the first sub-signal comprises a first characteristic sequence.

In one embodiment, the first sub-signal comprises a Random Access Preamble.

In one embodiment, the second sub-signal comprises a Medium Access Control layer Control Element (MAC CE).

In one embodiment, the second sub-signal comprises a Beam Failure Recovery (BFR) MAC CE or a truncated BFR MAC CE.

In one embodiment, a method in the first node comprises:
monitoring a response for the first signal in a first time window;
herein, time-domain resources occupied by the first signal are used to determine the first time window, and the first time window is not later than a start time for transmitting the first signal.

In one embodiment, a method in the first node comprises:
monitoring a response for the second signal in a second time window;
herein, time-domain resources occupied by the second signal are used to determine the second time window, and the second time window is not later than a start time for transmitting the second signal.

In one embodiment, the M configuration information blocks are respectively used to indicate the M radio resource groups.

In one embodiment, the M configuration information blocks are respectively used to indicate corresponding relations among the M radio resource groups and the M reference signals.

In one embodiment, each configuration information block corresponding to a reference signal transmitted by a first cell among the M configuration information blocks comprises a first index, and the first index is used to indicate the first cell; each configuration information block corresponding to a reference signal transmitted by a second cell among the M configuration information blocks comprises a second index, and the second index is used to indicate the second cell.

In one embodiment, any of the M configuration information blocks is configured by an RRC signaling.

In one embodiment, any of the M configuration information blocks is configured by a MAC CE signaling.

In one embodiment, there exists one configuration block being carried together by an RRC signaling and a MAC CE signaling together among the M configuration information blocks.

In one embodiment, any of the M configuration information blocks comprises information in all or partial fields in an IE.

In one embodiment, any of the M configuration information blocks comprises partial or all information in a candidateBeamRSList field in a BeamFailureRecoveryConfig IE.

In one embodiment, the M configuration information blocks belong to a same IE in an RRC signaling.

In one embodiment, there exist two of the M configuration information blocks belonging to two IEs in an RRC signaling.

In one embodiment, M1 configuration information block(s) comprises(comprise) a configuration information block corresponding to each reference signal in the first reference signal subset among the M configuration information blocks, and M2 configuration information block(s) comprises(comprise) a configuration information block corresponding to each reference signal in the first reference signal subset among the M configuration information blocks.

In one embodiment, the M1 configuration information block(s) belongs(belong) to a same IE in an RRC signaling.

In one embodiment, the M2 configuration information block(s) belongs(belong) to a same IE in an RRC signaling.

In one embodiment, the M1 configuration information block(s) and the M2 configuration information block(s) respectively belong to two IEs in an RRC signaling.

In one embodiment, the M1 configuration information block(s) and the M2 configuration information block(s) are respectively transmitted by two cells.

In one embodiment, the M1 configuration information block(s) is(are) transmitted by a first cell, and the M2 configuration block(s) is(are) transmitted by a second cell.

In one embodiment, any configuration information block in the M1 configuration information block(s) is transmitted by a serving cell of the first node.

In one embodiment, any configuration information block in the M2 configuration information block(s) is transmitted by a non-serving cell of the first node.

In one embodiment, transmitters of the M configuration information blocks are all the first cell.

In one embodiment, there exists a transmitter of one of the M configuration information blocks being the first cell.

In one embodiment, there exists a transmitter of one of the M configuration information blocks being the second cell.

In one embodiment, a transmitter of any of the M configuration information blocks is a serving cell of the first node.

In one embodiment, there exists a transmitter of one of the M configuration information blocks being a serving cell of the first node.

In one embodiment, there exists a transmitter of one of the M configuration information blocks being a non-serving cell of the first node.

In one embodiment, the first index is a non-negative integer.

In one embodiment, the first index is an SCellIndex corresponding to the first cell.

In one embodiment, the first index is a ServCellIndex corresponding to the first cell.

In one embodiment, the first index is a PhysCellId corresponding to the first cell.

In one embodiment, the second index is a non-negative integer.

In one embodiment, the second index is a CellIdentity corresponding to the second cell.

In one embodiment, the second index is a PhysCellId corresponding to the second cell.

In one embodiment, any of the M configuration information blocks comprises a first-type index, and the first-type index comprised in any of the M configuration information blocks is used to identify a reference signal corresponding to the given configuration information block among the M reference signals.

In one embodiment, the first-type index comprised in the given configuration information block is an index of a reference signal corresponding to the given configuration information block among the M reference signals.

In one embodiment, the first-type index is a non-negative integer.

In one embodiment, the first-type index comprises an SSB-Index.

In one embodiment, the first-type index comprises an SSB Resource Indicator (RI).

In one embodiment, the first-type index comprises an NZP-CSI-RS-ResourceId.

In one embodiment, the first-type index comprises a CSI-RS Resource Indicator (CRI).

In one embodiment, any of the M configuration information blocks comprises a second-type index, the second-type index comprised in any of the M configuration information blocks indicates a radio resource group corresponding to a reference signal corresponding to the given configuration information block among the M radio resource groups.

In one embodiment, the second-type index is a non-negative integer.

In one embodiment, the second-type index comprises ra-PreambleIndex.

In one embodiment, a configuration information block corresponding to the first reference signal among the M configuration blocks indicates radio resources occupied by the first signal.

In one embodiment, the first index and the second index respectively consist of Q1 bit(s) and Q2 bit(s), Q1 and Q2 are two different positive integers.

In one embodiment, Q1 is less than the Q2.

In one embodiment, Q2 is 10.

In one embodiment, Q2 is 28.

In one embodiment, Q2 is 9.

In one embodiment, Q1 is 5.

In one embodiment, Q1 is 3.

In one embodiment, the first radio resource set comprises the M radio resource groups.

In one embodiment, the first radio resource set comprises partial radio resources in the M radio resource groups.

In one embodiment, the first radio resource set comprises the M1 radio resource group(s).

In one embodiment, the first radio resource set comprises partial radio resources in the M1 radio resource group(s).

In one embodiment, the first radio resource set comprises the M3 radio resource group(s).

In one embodiment, the first radio resource set comprises partial radio resource group(s) in the M3 radio resource group(s).

In one embodiment, the first reference signal sub-group is the first reference signal group.

In one embodiment, there exists a reference signal in the first reference signal group not belonging to the first reference signal sub-group.

In one embodiment, the first information group comprises a first information sub-group and a second information sub-group, the first reference signal group comprises a first reference signal sub-group and a second reference signal sub-group, the first information sub-group is used to indicate the first reference signal sub-group, and the second information sub-group is used to indicate the second reference signal sub-group; any information block in the first information sub-group belongs to the first information group, and any information block in the second information sub-group belongs to the second information group; the first reference signal sub-group comprises a positive integer number of reference signal(s), and the second reference signal sub-group comprises a positive integer number of reference signal(s).

In one embodiment, a transmitter of the first reference signal sub-group and a transmitter of the second reference signal sub-group are different.

In one embodiment, any information block in the first information sub-group does not belong to the second information sub-group.

In one embodiment, the first information group comprises S information blocks, the first information sub-group comprises S1 information block(s), the first reference signal sub-group comprises S1 reference signal(s), and the S1 information block(s) is(are respectively) used to indicate the S1 reference signal(s), S being a positive integer greater than 1, S1 being a positive integer not greater than S.

In one embodiment, S1 is less than S.

In one embodiment, S1 is equal to S.

In one embodiment, the first information group comprises S information blocks, the second information sub-group comprises S2 information block(s), the second reference signal sub-group comprises S2 reference signal(s), and the S2 information block(s) is(are respectively) used to indicate the S2 reference signal(s), S being a positive integer greater than 1, S2 being a positive integer not greater than S.

In one embodiment, S1 is less than S, and S2 is less than S.

In one embodiment, a sum of S1 and S2 is equal to S.

In one embodiment, the second reference signal subset is transmitted by a third node.

In one embodiment, the third node is not a maintenance base station of a serving cell of the first node.

In one embodiment, the third node is not a maintenance base station of the first cell.

In one embodiment, the third node is not a maintenance base station of the first cell.

In one embodiment, the third node is a maintenance base station of the second cell.

In one embodiment, any cell maintained by the third node is a non-serving cell of a transmitter of the first signal.

In one embodiment, a method in the third node comprises:
transmitting a second reference signal sub-group;
herein, any reference signal in the second reference signal sub-group belongs to the first reference signal group, and the second reference signal sub-group comprises a positive integer number of reference signal(s).

In one embodiment, a method in the third node comprises:
motoring a second signal in a second radio resource group;
herein, the second signal is used to determine the second reference signal, a third reference signal is used to determine a spatial-domain relation of the second radio resource group, and the second reference signal and the third reference signal are QCL.

In one embodiment, a method in the third node comprises:
monitoring a radio signal in each radio resource group other than the second radio resource group in a second radio resource set;
herein, the second radio resource group is any radio resource group in the second radio resource set, and the second signal is a radio signal being monitored in the first radio resource group.

In one embodiment, the second radio resource set comprises the M2 radio resource group(s).

In one embodiment, the second radio resource set comprises partial radio resource group(s) in the M2 radio resource group(s).

In one embodiment, a method in the third node comprises:
when the second signal is detected in the second radio resource group, transmitting a response for the second signal in a second time window;
herein, time-domain resources occupied by the second signal are used to determine the second time window.

### Embodiment 6

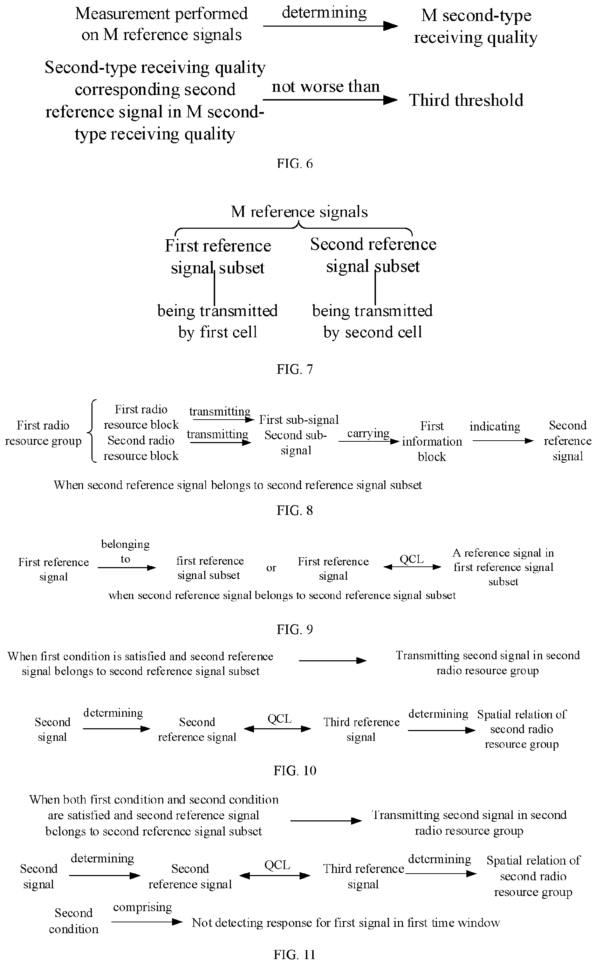

Embodiment 6 illustrates a schematic diagram of a second reference signal according to one embodiment of the present application, as shown in FIG. 6. In embodiment 6, measurements performed on the M reference signals are respectively used to determine M second-type receiving quality; a second-type receiving quality corresponding to the second reference signal among the M second-type receiving quality is not worse than a third threshold.

In one embodiment, for any given reference signal in the M reference signals, a measurement performed on the given reference signal in a second time interval is used to determine a second-type receiving quality corresponding to the given reference signal.

In one embodiment, for any given reference signal in the M reference signals, the first node acquires a measurement used to calculate a second-type receiving quality corresponding to the given reference signal only according to the received given reference signal within a second time interval.

In one embodiment, the second time interval is a continuous duration.

In one embodiment, a length of the second time interval is T_{Evaluate_CBD_SSB} ms or T_{Evaluate_CBD_CSI-RS} ms.

In one embodiment, for definitions of T_{Evaluate_CBD_SSB} or T_{Evaluate_CBD_CSI-RS}, refer to 3GPP TS38.133.

In one embodiment, any of the M second-type receiving quality is RSRP.

In one embodiment, any of the M second-type receiving quality is L1-RSRP.

In one embodiment, any of the M second-type receiving quality is an SINR.

In one embodiment, any of the M second-type receiving quality is an L 1-SINR.

In one embodiment, any of the M second-type receiving quality is a BLER.

In one embodiment, the meaning of the phrase that given receiving quality is not less than the third threshold comprises: the given receiving quality is one of RSRP, L 1-RSRP, SINR or L1-SINR, and the given receiving quality is greater than or equal to the third threshold; the given receiving quality is any second-type receiving quality in the M second-type receiving quality.

In one embodiment, the meaning of the phrase that given receiving quality is not less than the third threshold comprises: the given receiving quality is BLER, and the given receiving quality is less than or equal to the third threshold; the given receiving quality is any second-type receiving quality in the M second-type receiving quality.

In one embodiment, any second-type receiving quality in the M second-type receiving quality is acquired by table looking-up RSRP, L1-RSRP, an SINR or an L1-SINR of a corresponding reference signal.

In one embodiment, the third threshold is a real number.

In one embodiment, the third threshold is a non-negative real number.

In one embodiment, the third threshold is a non-negative real number not greater than 1.

In one embodiment, the third threshold is Q_{in_LR}.

In one embodiment, for the definition of Q_{in_LR}, refer to 3GPP TS38.133.

In one embodiment, the third threshold is configured by a higher-layer parameter rsrp-ThresholdSSB.

In one embodiment, for a reference signal in the first reference signal subset and a reference signal in the second reference signal subset, a value of the third threshold is different.

In one embodiment, when the second reference signal belongs to the first reference signal subset, the third threshold is equal to a first value; when the second reference signal belongs to the second reference signal subset, the third threshold is equal to a second value; the first value and the second value are respectively real numbers, and the first value is not equal to the second value.

In one embodiment, the first condition comprises: there exists second-type receiving quality corresponding one of M reference signals being not less than the third threshold.

In one embodiment, when a value of the first counter is not less than the first threshold, and there exists second-type receiving quality corresponding to one of the M reference signals being not less than the third threshold, the first condition is satisfied.

In one embodiment, when second-type receiving quality corresponding to any of the M reference signals is less than the third threshold, the first condition is not satisfied.

In one embodiment, when a given reference signal belongs to the first reference signal subset, the third threshold is equal to a first value; when the given reference signal belongs to the second reference signal subset, the third threshold is equal to a second value; the first value and the second value are respectively real numbers, and the first value is not equal to the second value; the given reference signal is any of the M reference signals.

### Embodiment 7

Embodiment 7 illustrates a schematic diagram of a first reference signal subset and a second reference signal subset according to one embodiment of the present application, as shown in FIG. 7. In embodiment 7, a transmitter of the first reference signal subset is a first cell, a transmitter of the second reference signal subset is a second cell, the first cell is a serving cell of the first node, and the second cell is a non-serving cell of the first node.

In one embodiment, the first cell is an SpCell.

In one embodiment, the first cell is a PCell.

In one embodiment, the second cell is an SCell.

In one embodiment, the first cell is a cell serving the first node before the first condition is satisfied.

In one embodiment, the first cell is a cell serving the first node before beam failure recovers.

In one embodiment, the first cell is a beam-maintained cell serving the first node before the first condition is satisfied.

In one embodiment, the first cell is a beam-maintained cell serving the first node before beam failure recovers.

In one embodiment, the second node is a maintenance base station of the first cell.

In one embodiment, there exists a transmitter of one of the M reference signals being a third cell, and the third cell is different from the first cell and the second cell.

In one embodiment, the third cell is a non-serving cell of the first node.

In one embodiment, the third cell is a serving cell of the first node.

In one embodiment, the first reference signal belongs to the first reference signal sub-set.

In one embodiment, a transmitter of the first reference signal is the first cell.

In one embodiment, a transmitter of the first reference signal is a serving cell of the first node.

In one embodiment, the meaning of the phrase that the second cell is a non-serving cell of the first node comprises: the first node does not execute SCell addition for the second cell.

In one embodiment, the meaning of the phrase that the second cell is a non-serving cell of the first node comprises: a sCellToAddModList recently received by the first node does not comprise the second cell.

In one embodiment, the meaning of the phrase that the second cell is a non-serving cell of the first node comprises: a sCellToAddModList and a sCellToAddModListSCG recently received by the first node do not comprise the second cell.

In one embodiment, the meaning of the phrase that the second cell is a non-serving cell of the first node comprises: the first node is not allocated a SCellIndex for the second cell.

In one embodiment, the SCellIndex is a positive integer not greater than 31.

In one embodiment, the meaning of the phrase that the second cell is a non-serving cell of the first node comprises: the first node is not allocated a ServCellIndex for the second cell.

In one embodiment, the ServCellIndex is non-negative integer not greater than 31.

In one embodiment, the meaning of the phrase that the second cell is a non-serving cell of the first node comprises: the second cell is not a PCell of the first node.

In one embodiment, the meaning of the phrase that the second cell is a non-serving cell of the first node comprises: no RRC connection is established between the first node and the second cell.

In one embodiment, the meaning of the phrase that the second cell is a non-serving cell of the first node comprises: a C-RNTI of the first node is not allocated by the second cell.

In one embodiment, the meaning of the phrase that the first cell is a serving cell of the first node comprises: the first node executes secondary cell addition for the first cell.

In one embodiment, the meaning of the phrase that the first cell is a serving cell of the first node comprises: a sCellToAddModList recently received by the first node comprises the first cell.

In one embodiment, the meaning of the phrase that the first cell is a serving cell of the first node comprises: a sCellToAddModList or a sCellToAddModListSCG recently received by the first node comprises the first cell.

In one embodiment, the meaning of the phrase that the first cell is a serving cell of the first node comprises: the first node is allocated an SCellIndex for the first cell.

In one embodiment, the meaning of the phrase that the first cell is a serving cell of the first node comprises: the first node is allocated a ServCellIndex for the first cell.

In one embodiment, the meaning of the phrase that the first cell is a serving cell of the first node comprises: an RRC connection is established between the first node and the first cell.

In one embodiment, the meaning of the phrase that the first cell is a serving cell of the first node comprises: a C-RNTI of the first node is allocated by the first cell.

In one embodiment, a transmitter of any reference signal in the first reference signal subset is a serving cell of the first node.

In one embodiment, the first reference signal subset comprises all reference signals transmitted by a serving cell of the first node among the M reference signals.

In one embodiment, the first node executes secondary serving cell addition for a transmitter of any reference signal in the first reference signal subset.

In one embodiment, a latest received sCellToAddModList of the first node comprises a transmitter of any reference signal in the first reference signal subset.

In one embodiment, the first node is allocated an SCellIndex and/or ServCellIndex for a transmitter of any reference signal in the first reference signal subset.

In one embodiment, an RRC connection is established between the first node and a transmitter of any reference signal in the first reference signal subset.

In one embodiment, a transmitter of any reference signal in the second reference signal subset is a non-serving cell of the first node.

In one embodiment, the second reference signal subset comprises all reference signals transmitted by a non-serving cell of the first node among the M reference signals.

In one embodiment, the first node does not execute secondary cell addition for a transmitter of any reference signal in the second reference signal subset.

In one embodiment, a latest received sCellToAddModList of the first node does not comprise a transmitter of any reference signal in the second reference signal subset.

In one embodiment, the first node is not allocated with an SCellIndex and / or ServCellIndex for a transmitter of any reference signal in the second reference signal subset.

In one embodiment, a transmitter of any reference signal in the second reference signal subset is not a PCell of the first node.

In one embodiment, an RRC connection is not established between the first node and a transmitter of any reference signal in the second reference signal subset.

### Embodiment 8

Embodiment 8 illustrates a schematic diagram of a first signal being used to determine a second reference signal according to one embodiment of the present application, as shown in FIG. 8. In embodiment 8, when the second reference signal belongs to the second reference signal subset, the first radio resource group comprises a first radio resource block and a second radio resource block, the first signal comprises a first sub-signal and a second sub-signal, the first sub-signal is transmitted in the first radio resource block, the second sub-signal is transmitted in the second radio resource block, the second sub-signal carries a first information block, and the first information block is used to indicate the second reference signal.

In one embodiment, when the second reference signal belongs to the second reference signal subset, the first signal is used to determine the first reference signal and the second reference signal.

In one embodiment, when the second reference signal belongs to the second reference signal subset, the first sub-signal is used to determine the first reference signal, and the second sub-signal is used to determine the second reference signal.

In one embodiment, when the second reference signal belongs to the second reference signal subset, radio resources occupied by the first sub-signal are used to determine the first reference signal, and the second sub-signal is used to indicate the second reference signal.

In one embodiment, when the second reference signal belongs to the second reference signal subset, the first sub-signal comprises a random access preamble, and the random access preamble comprised in the first sub-signal is used to determine the first reference signal.

In one embodiment, M3 reference signal(s) corresponds(respectively correspond) to M3 radio resource group(s), the first radio resource group is a radio resource group comprising radio resources occupied by the first sub-signal among the M3 radio resource group(s), the first reference signal is a reference signal corresponding to the first radio resource group among the M3 reference signal(s).

In one embodiment, the M reference signals respectively correspond to M radio resource groups, the first radio resource group is a radio resource group comprising radio resources occupied by the first sub-signal among the M radio resource groups, and the first reference signal is a reference signal corresponding to the first radio resource group among the M reference signals.

In one embodiment, the meaning of the phrase that the first signal is used to determine a second reference signal comprises: the first signal comprises the first sub-signal and the second sub-signal, the first reference signal subset comprises M1 reference signal(s), the M1 reference signal(s) corresponds(respectively correspond) to M1 radio resource group(s), the first radio resource group is a radio resource group comprising radio resources occupied by the first sub-signal among the M1 radio resource group(s), and the first reference signal is a reference signal corresponding to the first radio resource group among the M reference signals, M1 being a positive integer less than M.

In one embodiment, the first radio resource block is orthogonal to the second radio resource block.

In one embodiment, the first information block comprises a BFR MAC CE.

In one embodiment, the first information block comprises a truncated BFE MAC CE.

In one embodiment, the first information block comprises a first field, and a value of the first field in the first information block is equal to 1.

In one embodiment, the first field is an SP field in a BFR MAC CE.

In one embodiment, the first field is an SP field in a truncated BFR MAC CE.

In one embodiment, the first information block comprises a second field, and the second field in the first information block is used to indicate the second reference signal.

In one embodiment, the first information block comprises a second field, and the second field in the first information block indicates an index of the second reference signal.

In one embodiment, the second field is for the second cell.

In one embodiment, the second field is for the first cell.

In one embodiment, the meaning of the phrase that the first signal is used to determine a second reference signal comprises: when the second reference signal belongs to the second reference signal subset, the second sub-signal is used to determine the second reference signal.

In one embodiment, the meaning of the phrase that the first signal is used to determine a second reference signal comprises: when the second reference signal belongs to the second reference signal subset, the second sub-signal is used to indicate the second reference signal.

In one embodiment, the meaning of the phrase that the first signal is used to determine a second reference signal comprises: radio resources occupied by the first signal are used to determine the second reference signal.

In one embodiment, the meaning of the phrase that the first signal is used to determine a second reference signal comprises: the first signal comprises a first characteristic sequence, and the first characteristic sequence is used to determine the second reference signal.

In one embodiment, the meaning of the phrase that the first signal is used to determine a second reference signal comprises: radio resources occupied by the first signal indicate the second reference signal from the M reference signals.

In one embodiment, the meaning of the phrase that the first signal is used to determine a second reference signal comprises: the M reference signals respectively correspond to M radio resource groups, the first radio resource group is a radio resource group comprising radio resources occupied by the first signal among the M radio resource groups, and the second reference signal is a reference signal corresponding to the second radio resource group among the M reference signals.

In one embodiment, the meaning of the phrase that the first signal is used to determine a second reference signal comprises: the first reference signal subset comprises M1 reference signal(s), the M1 reference signal(s) corresponds(respectively correspond) to M1 radio resource group(s), the first radio resource group is a radio resource group comprising radio resources occupied by the first signal among the M1 radio resource group(s), and the second reference signal is a reference signal corresponding to the second radio resource group among the M reference signals, M1 being a positive integer less than M.

In one embodiment, the meaning of the phrase that the first signal is used to determine a second reference signal comprises: the first signal comprises a first bit field, and the first bit field comprises a positive integer number of bit(s); a value of the first bit field indicates the second reference signal.

In one embodiment, the meaning of the phrase that the first signal is used to determine a second reference signal comprises: the first signal comprises the first sub-signal and the second sub-signal, the second sub-signal comprises a second bit field, and the second bit field comprises a positive integer number of bit(s); a value of the second bit field indicates the second reference signal.

In one embodiment, the meaning of the phrase that the first signal is used to determine a second reference signal comprises: the first signal comprises the first sub-signal and the second sub-signal, and radio resources occupied by the first sub-signal are used to determine the second reference signal.

In one embodiment, the meaning of the phrase that the first signal is used to determine a second reference signal comprises: the first signal comprises the first sub-signal and the second sub-signal, and radio resources occupied by the first sub-signal indicate the second reference signal from the M reference signals.

In one embodiment, the meaning of the phrase that the first signal is used to determine a second reference signal comprises: the first signal comprises the first sub-signal and the second sub-signal, the M reference signals respectively correspond to M radio resource groups, the first radio resource group is a radio resource group comprising radio resources occupied by the first sub-signal among the M radio resource groups, and the second reference signal is a reference signal corresponding to the second radio resource group among the M reference signals.

In one embodiment, the meaning of the phrase that the first signal is used to determine a second reference signal comprises: the first signal comprises the first sub-signal and the second sub-signal, the first reference signal subset comprises M1 reference signal(s), the M1 reference signal(s) corresponds(respectively correspond) to M1 radio resource group(s), the first radio resource group is a radio resource group comprising radio resources occupied by the first sub-signal among the M1 radio resource group(s), and the second reference signal is a reference signal corresponding to the second radio resource group among the M reference signals, M1 being a positive integer less than M.

In one embodiment, the M radio resource groups respectively comprise M Physical Random Access Channel (PRACH) resources.

In one embodiment, the M radio resource groups respectively comprise M1 Physical Random Access Channel (PRACH) resource(s).

In one embodiment, the meaning of the phrase that the first signal is used to determine a second reference signal comprises: when the second reference signal belongs to the first reference signal subset, the first sub-signal is used to determine the second reference signal.

In one embodiment, the meaning of the phrase that the first signal is used to determine a second reference signal comprises: when the second reference signal belongs to the first reference signal subset, the first signal is used to indicate the second reference signal.

In one embodiment, the meaning of the phrase that the first signal is used to determine a second reference signal comprises: when the second reference signal belongs to the first reference signal subset, radio resources occupied by the first signal are used to determine a second reference signal.

In one embodiment, the meaning of the phrase that the first signal is used to determine a second reference signal comprises: when the second reference signal belongs to the first reference signal subset, a preamble comprised in the first signal is used to determine a second reference signal.

In one embodiment, the meaning of the phrase that the first signal is used to determine a second reference signal comprises: when the second reference signal belongs to the first reference signal subset, a random access preamble comprised in the first signal is used to determine a second reference signal.

In one embodiment, the meaning of the phrase that the first signal is used to determine a second reference signal comprises: when the second reference signal belongs to the first reference signal subset, the first radio resource group comprises a first radio resource block and a second radio resource block, the first signal comprises a first sub-signal and a second sub-signal, the first sub-signal is transmitted in the first radio resource block, the second sub-signal is transmitted in the second radio resource block, and the first sub-signal is used to determine the second reference signal.

In one subembodiment of the above embodiment, the second sub-signal is transmitted in the second radio resource block, and the second sub-signal carries a second information block.

In one subembodiment of the above embodiment, the second sub-signal is not used to indicate the second reference signal.

In one subembodiment of the above embodiment, radio resources occupied by the first sub-signal are used to determine a second reference signal.

In one subembodiment of the above embodiment, a preamble comprised in the first sub-signal is used to determine a second reference signal.

In one subembodiment of the above embodiment, a random access preamble comprised in the first sub-signal is used to determine a second reference signal.

In one embodiment, the second information block comprises a BFR MAC CE.

In one embodiment, the second information block comprises a truncated BFE MAC CE.

In one embodiment, the first information block is different from the second information block.

In one embodiment, the second information block comprises a first field, and a value of the first field in the second information block is equal to 1.

In one embodiment, the second information block does not comprise the second field.

In one embodiment, the first information block is used to indicate the second reference signal, and the second information block is not used to indicate the second reference signal.

### Embodiment 9

Embodiment 9 illustrates a schematic diagram of a first reference signal according to one embodiment of the present application, as shown in FIG. 9.

In embodiment 9, when the second reference signal belongs to the second reference signal subset, the first reference signal belongs to the first reference signal subset, or the first reference signal and a reference signal in the first reference signal subset are QCL.

In one embodiment, when the second reference signal belongs to the second reference signal subset, the first reference signal belongs to the first reference signal subset.

In one embodiment, when the second reference signal belongs to the second reference signal subset, the first reference signal and a reference signal in the first reference signal subset are QCL.

In one embodiment, when the second reference signal belongs to the second reference signal subset, the first reference signal and a reference signal in the first reference signal subset are QCL corresponding to QCL-TypeD.

In one embodiment, when the second reference signal belongs to the second reference signal subset, M1 second-type receiving quality is each of second-type receiving quality corresponding to the first reference signal subset among the M second-type receiving quality, a target reference signal is a reference signal corresponding to the first reference signal subset and a target receiving quality, and the target receiving quality is one of the M1 second-type receiving quality, M1 being a positive integer less than M; the first reference signal is the target reference signal, or the first reference signal and the target reference signal are QCL.

In one subembodiment of the above embodiment, the first reference signal and the target reference signal are QCL corresponding to QCL-TypeD.

In one subembodiment of the above embodiment, the first reference signal is the target reference signal.

In one subembodiment of the above embodiment, the first reference signal and the target reference signal are QCL.

In one subembodiment of the above embodiment, the target receiving quality is not less than the third threshold.

In one subembodiment of the above embodiment, the target receiving quality is best second-type receiving quality among the M1 second-type receiving quality.

In one subembodiment of the above embodiment, the target receiving quality is best second-type receiving quality satisfying not worse than the third threshold among the M1 second-type receiving quality.

In one subembodiment of the above embodiment, the first node randomly selects the target receiving quality from the M1 second-type receiving quality.

In one subembodiment of the above embodiment, selecting the target receiving quality from the M1 second-type receiving quality is implementation related to the first node.

In one embodiment, the meaning of the phrase that the target receiving quality is best second-type receiving quality among the M1 second-type receiving quality comprises: the second-type receiving quality is one of RSRP, L1-RSRP, SINR or L1-SINR, and the target receiving quality is a maximum value among the M1 second-type receiving quality.

In one embodiment, the meaning of the phrase that the target receiving quality is best second-type receiving quality among the M1 second-type receiving quality comprises: the second-type receiving quality is BLER, and the target receiving quality is a minimum value among the M1 second-type receiving quality.

In one embodiment, the meaning of the phrase that the target receiving quality is best second-type receiving quality satisfying not worse than the third threshold among the M1 second-type receiving quality comprises: the second-type receiving quality is one of RSRP, L1-RSRP, SINR or L1-SINR, and the target receiving quality is a maximum value among the M1 second-type receiving quality satisfying not worse than the third threshold.

In one embodiment, the meaning of the phrase that the target receiving quality is best second-type receiving quality satisfying not worse than the third threshold among the M1 second-type receiving quality comprises: the second-type receiving quality is BLER, and the target receiving quality is a minimum value satisfying not greater than the third threshold among the M1 second-type receiving quality.

### Embodiment 10

Embodiment 10 illustrates a schematic diagram of a second signal according to one embodiment of the present application, as shown in FIG. 10.

In embodiment 10, when the first condition is satisfied and the second reference signal belongs to the second reference signal subset, transmitting a second signal in a second radio resource group; herein, the second signal is used to determine the second reference signal, a third reference signal is used to determine a spatial-domain relation of the second radio resource group, and the second reference signal and the third reference signal are QCL.

In one embodiment, the second radio resource group comprises PRACH resources.

In one embodiment, the second radio resource group comprises at least PRACH resources in a PRACH and radio resources occupied by a PUSCH scheduled by UL grant.

In one embodiment, the second radio resource group comprises at least radio resources occupied by Msg1 in radio resources occupied by Msg1 or radio resources occupied by a Msg3 PUSCH.

In one embodiment, the second radio resource group comprises at least radio resources occupied by Msg1 in radio resources occupied by Msg1 or radio resources occupied by PUSCH scheduled by an RAR UL grant.

In one embodiment, the second radio resource group comprises radio resources occupied by Msg1 and radio resources occupied by a Msg3 PUSCH.

In one embodiment, the second radio resource group comprises radio resources occupied by Msg1 or radio resources occupied by a PUSCH scheduled by an RAR UL grant.

In one embodiment, the second radio resource group comprises radio resources occupied by MsgA.

In one embodiment, the second radio resource group comprises time-frequency resources.

In one embodiment, the second radio resource group comprise time-frequency resources and code-domain resources.

In one embodiment, the second radio resource group is configured by a higher-layer parameter.

In one embodiment, a corresponding relation between the second radio resource group and the second reference signal is configured by a higher-layer parameter.

In one embodiment, a corresponding relation between the second radio resource group and the M reference signals is configured by a higher-layer parameter.

In one embodiment, a higher-layer parameter configuring the second radio resource group comprises all or partial information in a candidateBeamRSList field in a BeamFailureRecoveryConfig IE.

In one embodiment, a higher-layer parameter configuring a corresponding relation between the second radio resource group and the second reference signal comprises all or partial information in a candidateBeamRSList field in a BeamFailureRecoveryConfig IE.

In one embodiment, a higher-layer parameter configuring a corresponding relation between the second radio resource group and the M reference signals comprises all or partial information in a candidateBeamRSList field in a BeamFailureRecoveryConfig IE.

In one embodiment, the M reference signals respectively correspond to M radio resource groups, and the second radio resource group is a radio resource group corresponding to the second reference signal among the M radio resource groups.

In one embodiment, the second reference signal subset comprises M2 reference signal(s), the M2 reference signal(s) corresponds(respectively correspond) to M2 radio resource group(s), and the second radio resource group is a radio resource group corresponding to the second reference signal among the M2 radio resource group(s), M2 being a positive integer less than M.

In one embodiment, the second signal is used for a Beam Failure Request.

In one embodiment, the second signal comprises a baseband signal.

In one embodiment, the second signal comprises a radio signal.

In one embodiment, the second signal comprises a radio-frequency signal.

In one embodiment, the second signal comprises a second characteristic sequence.

In one embodiment, the second characteristic sequence comprises one or more of a pseudorandom sequence, a Zadoff-Chu sequence, or a low Peak-to-Average Power Ratio (PAPR) sequence.

In one embodiment, the second characteristic sequence comprises a Cyclic Prefix (CP).

In one embodiment, the second signal comprises a Random Access Preamble.

In one embodiment, the second signal comprises Uplink Control Information (UCI).

In one embodiment, the second signal comprises a Link Recovery Request (LRR).

In one embodiment, the second signal comprises a Medium Access Control layer Control Element (MAC CE).

In one embodiment, the second signal comprises a Beam Failure Recovery (BFR) MAC CE or a truncated BFR MAC CE.

In one embodiment, the second signal comprises at least the random access preamble of a random access preamble or a BFR MAC CE.

In one embodiment, the second signal comprises at least the random access preamble of a random access preamble or a truncated BFR MAC CE.

In one embodiment, the second signal comprises at least the random access preamble of a random access preamble or a MAC CE.

In one embodiment, the second signal comprises at least Msg1 in Msg1 or a Msg3 PUSCH.

In one embodiment, the second signal comprises MsgA.

In one embodiment, the second radio resource group comprises a third radio resource block and a fourth radio resource block, the second signal comprises a third sub-signal and a fourth sub-signal, the third sub-signal is transmitted in the third radio resource block, and the fourth sub-signal is transmitted in the fourth radio resource block.

In one embodiment, the third sub-signal comprises Msg1.

In one embodiment, the fourth sub-signal comprises a Msg 3 PUSCH.

In one embodiment, the fourth sub-signal comprises a PUSCH scheduled by an RAR uplink grant.

In one embodiment, the second signal comprises MsgA, the third sub-signal comprises a random access preamble in MsgA, and the fourth sub-signal comprises a PUSCH in MsgA.

In one embodiment, the third sub-signal comprises a second characteristic sequence.

In one embodiment, the third sub-signal comprises a Random Access Preamble.

In one embodiment, the fourth sub-signal comprises a Medium Access Control layer Control Element (MAC CE).

In one embodiment, the fourth sub-signal comprises a Beam Failure Recovery (BFR) MAC CE or a truncated BFR MAC CE.

In one embodiment, the second reference signal and the third reference signal are QCL corresponding to QCL-TypeD.

In one embodiment, the meaning of the phrase that the second signal is used to determine a second reference signal comprises: the second signal is used to indicate the second reference signal.

In one embodiment, the meaning of the phrase that the second signal is used to determine a second reference signal comprises: radio resources occupied by the second signal are used to determine the second reference signal.

In one embodiment, the meaning of the phrase that the second signal is used to determine a second reference signal comprises: radio resources occupied by the second signal indicate the second reference signal from the M reference signals.

In one embodiment, the meaning of the phrase that the second signal is used to determine a second reference signal comprises: radio resources occupied by the second signal indicate the second reference signal from the M2 reference signal(s).

In one embodiment, the meaning of the phrase that the second signal is used to determine a second reference signal comprises: the M reference signals respectively correspond to M radio resource groups, the second radio resource group is a radio resource group comprising radio resources occupied by the second signal among the M radio resource groups, and the second reference signal is a reference signal corresponding to the second radio resource group among the M reference signals.

In one embodiment, the meaning of the phrase that the second signal is used to determine a second reference signal comprises: the second reference signal subset comprises M1 reference signal(s), the M1 reference signal(s) corresponds(respectively correspond) to M1 radio resource group(s), the second radio resource group is a radio resource group comprising radio resources occupied by the second signal among the M1 radio resource group(s), and the second reference signal is a reference signal corresponding to the second radio resource group among the M reference signals, M1 being a positive integer less than M.

In one embodiment, the meaning of the phrase that the second signal is used to determine a second reference signal comprises: the second signal comprises a third bit field, and the third bit field comprises a positive integer number of bit(s); a value of the third bit field indicates the second reference signal.

In one embodiment, the meaning of the phrase that the second signal is used to determine a second reference signal comprises: the second signal comprises a third sub-signal and a fourth sub-signal, and radio resources occupied by the third sub-signal are used to determine the second reference signal.

In one embodiment, the meaning of the phrase that the second signal is used to determine a second reference signal comprises: the second signal comprises a second characteristic sequence, and the second characteristic sequence is used to determine the second reference signal.

In one embodiment, the meaning of the phrase that the second signal is used to determine a second reference signal comprises: the second signal comprises a random access preamble, and the random access preamble comprised in the second signal is used to determine the second reference signal.

In one embodiment, a second condition comprises: not detecting the response for the first signal in the first time window.

In one embodiment, a fourth condition comprises: not detecting the response for the second signal in the second time window.

In one embodiment, when both the fourth condition and the second condition are satisfied, the first node assumes that beam failure recovery is not successful.

In one embodiment, when both the fourth condition and the second condition are satisfied, radio link failure is triggered.

In one embodiment, when only one condition in the fourth condition and the second condition is satisfied, radio link failure is not triggered.

In one embodiment, when only one condition in the fourth condition and the second condition is satisfied, the first node assumes that beam failure recovery is successful.

In one embodiment, when neither the fourth condition nor the second condition is satisfied, radio link failure is not triggered.

In one embodiment, when neither the fourth condition nor the second condition is satisfied, the first node assumes that beam failure recovery is successful.

In one embodiment, the second time window and the first time window are overlapped.

### Embodiment 11

Embodiment 11 illustrates a schematic diagram of a second signal according to another embodiment of the present application, as shown in FIG. 11.

In embodiment 11, when both the first condition and a second condition are satisfied and the second reference signal belongs to the second reference signal subset, transmitting a second signal in a second radio resource group; herein, time-domain resources occupied by the first signal are used to determine the first time window, the first time window is not later than a start time for transmitting the second signal, the second signal is used to determine the second reference signal, a third reference signal is used to determine a spatial-domain relation of the second radio resource group, and the second reference signal and the third reference signal are QCL; the second condition comprises: not detecting the response for the first signal in the first time window.

In one embodiment, when and only when both the first condition and a second condition are satisfied and the second reference signal belongs to the second reference signal subset, the first node transmits a second signal in a second radio resource group.

In one embodiment, when the first condition is satisfied, the second condition is not satisfied and the second reference signal belongs to the second reference signal subset, the first node does not transmit a second signal in a second radio resource group.

In one embodiment, when the first condition is satisfied and the second reference signal belongs to the first reference signal subset, the first node does not transmit a second signal in a second radio resource group.

In one embodiment, when the response for the first signal is not detected in the first time window, the second condition is satisfied.

In one embodiment, when the response for the first signal is detected in the first time window, the second condition is not satisfied.

In one embodiment, when a value of the first counter is not less than the first threshold, the first condition is satisfied.

In one embodiment, when and only when a value of the first counter is not less than the first threshold, the first condition is satisfied.

In one embodiment, when a value of the first counter is less than the first threshold, the first condition is not satisfied.

In one embodiment, when the first condition is not satisfied, the first node does not transmit the first signal.

In one embodiment, the meaning of the phrase of monitoring a given signal comprises: the monitoring refers to blind decoding, that is, a signal is received and decoding operation is executed; if the decoding is determined correct according to a CRC bit, it is judged that the given signal is detected; otherwise, it is judged that the given signal is not detected.

In one subembodiment of the above embodiment, the given signal is the response for the first signal.

In one subembodiment of the above embodiment, the given signal is the first signal.

In one embodiment, the monitoring refers to a coherent detection, that is, coherent reception is performed and energy of a signal acquired after the coherent reception is measured; if the energy of the signal acquired after the coherent reception is greater than a first given threshold, it is judged that the given signal is detected; otherwise, it is judged that the given signal is not detected.

In one subembodiment of the above embodiment, the given signal is the response for the first signal.

In one subembodiment of the above embodiment, the given signal is the first signal.

In one embodiment, the meaning of the phrase of monitoring a given signal comprises: the monitoring refers to an energy detection, that is, energy of a radio signal is sensed and is averaged to acquire received energy; if the received energy is greater than a second given threshold, it is judged that the given signal is detected; otherwise, it is judged that the given signal is not detected.

In one subembodiment of the above embodiment, the given signal is the response for the first signal.

In one subembodiment of the above embodiment, the given signal is the first signal.

In one embodiment, the meaning of the phrase of monitoring a given signal comprises: determining whether the given signal is transmitted according to a CRC.

In one subembodiment of the above embodiment, the given signal is the response for the first signal.

In one subembodiment of the above embodiment, the given signal is the first signal.

In one embodiment, the meaning of the phrase of monitoring a given signal comprises: not determining whether the given signal is transmitted before judging whether decoding is correct according to a CRC.

In one subembodiment of the above embodiment, the given signal is the response for the first signal.

In one subembodiment of the above embodiment, the given signal is the first signal.

In one embodiment, the meaning of the phrase of monitoring a given signal comprises: determining whether the given signal is transmitted according to a coherent detection.

In one subembodiment of the above embodiment, the given signal is the response for the first signal.

In one subembodiment of the above embodiment, the given signal is the first signal.

In one embodiment, the meaning of the phrase of monitoring a given signal comprises: not determining whether the given signal is transmitted before a coherent detection.

In one subembodiment of the above embodiment, the given signal is the response for the first signal.

In one subembodiment of the above embodiment, the given signal is the first signal.

In one embodiment, the meaning of the phrase of monitoring a given signal comprises: determining whether the given signal is transmitted according to an energy detection.

In one subembodiment of the above embodiment, the given signal is the response for the first signal.

In one subembodiment of the above embodiment, the given signal is the first signal.

In one embodiment, the meaning of the phrase of monitoring a given signal comprises: not determining whether the given signal is transmitted before an energy detection.

In one subembodiment of the above embodiment, the given signal is the response for the first signal.

In one subembodiment of the above embodiment, the given signal is the first signal.

In one embodiment, the response to the first signal comprises a physical-layer signaling.

In one embodiment, the response to the first signal is transmitted on a PDCCH.

In one embodiment, the response to the first signal comprises Msg4.

In one embodiment, the response for the first signal comprises a Contention Resolution PDSCH.

In one embodiment, when the second reference signal belongs to the first reference signal subset, a search space set to which the first resource block set belongs is identified by a recovery SearchSpaceld.

In one embodiment, when the second reference signal belongs to the first reference signal subset, a CRC of the response for the first signal is scrambled by a C-RNTI or a Modulation and Coding Scheme (MCS).

In one embodiment, when the second reference signal belongs to the second reference signal subset, a CRC of the response for the first signal is scrambled by a TC-RNTI.

In one embodiment, when the second reference signal belongs to the second reference signal subset, a CRC of the response for the first signal is scrambled by a C-RNTI.

In one embodiment, when the second reference signal belongs to the second reference signal subset, a CRC of the response for the first signal is scrambled by a MsgB-RNTI.

In one embodiment, when the second reference signal belongs to the second reference signal subset, the first resource block set belongs to a PDCCH Common search space (CSS) set.

In one embodiment, when the second reference signal belongs to the second reference signal subset, the first resource block set belongs to a Type1-PDCCH CSS set.

In one embodiment, the first node detects the response to the first signal in the first time window, and the first counter is cleared.

In one embodiment, the first node detects the response for the first signal in the first time window, the first node assumes that beam failure recovery is successful.

In one embodiment, the response for the first signal comprises Downlink control information (DCI).

In one embodiment, a CRC of the response for the first signal is scrambled by a TC-RNTI.

In one embodiment, a CRC of the response for the first signal is scrambled by a MsgB-RNTI.

In one embodiment, a CRC of the response for the first signal is scrambled by a C-RNTI or a Modulation and Coding Scheme (MCS)-C-RNTI.

In one embodiment, a CRC of the response for the first signal is scrambled by a Random Access (RA)-RNTI.

In one embodiment, the first node monitors a response for the first signal in a first resource block set, and the first resource block set belongs to the first time window in time domain.

In one embodiment, the first resource block set is configured by a transmitter of the first reference signal.

In one embodiment, the first resource block set is configured by the first cell.

In one embodiment, the first resource block set comprises a search space set.

In one embodiment, the first resource block set comprises one or multiple Physical Downlink Control Channel (PDCCH) candidates.

In one embodiment, the first resource block set comprises a COntrol REsource SET (CORESET).

In one embodiment, a search space set to which the first resource block set belongs is identified by a recoverySearchSpaceId.

In one embodiment, an index of a search space set to which the first resource block set belongs is equal to 0.

In one embodiment, a search space set to which the first resource block set belongs comprises a Type1-PDCCH CSS set.

In one embodiment, the first node uses a same spatial-domain filter to receive the first reference signal and monitors a response for the first signal in the first time window.

In one embodiment, the first node assumes that a same antenna port QCL parameter is used to receive the first reference signal and monitors a response to for the first signal in the first time window.

In one embodiment, the first node assumes that the response for the first signal transmitted in the first time window and the first reference signal are QCL.

In one embodiment, the first node assumes that a DeModulation Reference Signals (DMRS) port of a response for the first signal transmitted in the first time window and the first reference signal are QCL.

In one embodiment, the first time window comprises continuous time-domain resources.

In one embodiment, a duration of the first time window is configured by a higher-layer signaling.

In one embodiment, a duration of the first time window is configured by a BeamFailureRecoveryConfig IE.

In one embodiment, a duration of the first time window is configured by a beamFailureRecoveryTimer.

In one embodiment, a first slot is a slot comprising time-domain resources occupied by the first signal, and the first slot is used to determine the first time window.

In one embodiment, the first slot is slot n1, and the first time window starts from slot n1+X1, X1 being a positive integer.

In one subembodiment of the above embodiment, X1 is equal to 4.

In one subembodiment of the above embodiment, X1 is not equal to 4.

In one subembodiment of the above embodiment, X1 is configured by a higher-layer signaling.

In one subembodiment of the above embodiment, X1 is default.

In one embodiment, when the first condition is satisfied, the second condition is not satisfied and the second reference signal belongs to the second reference signal subset, radio link failure is not triggered.

In one embodiment, when the fourth condition is satisfied, radio link failure is triggered.

In one embodiment, when the fourth condition is satisfied, the first node assumes that beam failure recovery is not successful.

In one embodiment, when the fourth condition is not satisfied, radio link failure is not triggered.

In one embodiment, when the fourth condition is not satisfied, the first node assumes that beam failure recovery is successful

In one embodiment, when the fourth condition is not satisfied, the first node assumes that beam failure recovery is successful.

In one embodiment, when the fourth condition is not satisfied, the first counter is cleared.

In one embodiment, the second time window and the first time window are orthogonal.

In one embodiment, a start time of the second time window is not earlier than an end time of the first time window.

In one embodiment, the response for the second signal is not detected in the second time window, and the fourth condition is satisfied.

In one embodiment, the response for the second signal is detected in the second time window, and the fourth condition is not satisfied.

In one embodiment, the second time window comprises continuous time-domain resources.

In one embodiment, a duration of the second time window is the same as a duration of the first time window.

In one embodiment, a duration of the second time window is different from a duration of the first time window.

In one embodiment, a duration of the second time window and a duration of the first time window are respectively configured by two higher-layer parameters.

In one embodiment, a duration of the second time window is configured by a higher-layer signaling.

In one embodiment, a duration of the second time window is configured by a BeamFailureRecoveryConfig IE.

In one embodiment, a duration of the second time window is configured by a beamFailureRecoveryTimer.

In one embodiment, a second slot is a slot comprising time-domain resources occupied by the second signal, and the second slot is used to determine the second time window.

In one embodiment, the second slot is slot n2, the second time window starts from n2+X2, X2 being a positive integer.

In one subembodiment of the above embodiment, X2 is equal to 4.

In one subembodiment of the above embodiment, X2 is not equal to 4.

In one subembodiment of the above embodiment, X2 is configured by a higher-layer signaling.

In one subembodiment of the above embodiment, X2 is default.

In one embodiment, the response for the second signal comprises a physical-layer signaling.

In one embodiment, the response for the second signal is transmitted on a PDCCH.

In one embodiment, the response for the second signal comprises Msg4.

In one embodiment, the response for the second signal comprises a Contention Resolution PDSCH.

In one embodiment, the response for the second signal comprises Downlink control information (DCI).

In one embodiment, a CRC of the response for the second signal is scrambled by a TC-RNTI.

In one embodiment, a CRC of the response for the second signal is scrambled by a MsgB-RNTI.

In one embodiment, a CRC of the response for the second signal is scrambled by a C-RNTI or a Modulation and Coding Scheme (MCS)-C-RNTI.

In one embodiment, a CRC of the response for the second signal is scrambled by a Random Access (RA)-RNTI.

In one embodiment, the first node monitors a response for the second signal in a second resource block set, and the second resource block set belongs to the second time window in time domain.

In one embodiment, the second resource block set is configured by a transmitter of the second reference signal.

In one embodiment, the second resource block set is configured by the second cell.

In one embodiment, the second resource block set is configured by a transmitter of the first reference signal.

In one embodiment, the second resource block set is configured by the first cell.

In one embodiment, the second resource block set comprises a search space set.

In one embodiment, the second resource block set comprises one or multiple Physical Downlink Control Channel (PDCCH) candidates.

In one embodiment, the second resource block set comprises a COntrol REsource SET (CORESET).

In one embodiment, a search space set to which the second resource block set belongs is identified by a recovery SearchSpaceld.

In one embodiment, an index of a search space set to which the second resource block set belongs is equal to 0.

In one embodiment, a search space set to which the second resource block set belongs comprises a Type1-PDCCH CSS set.

In one embodiment, the first node uses a same spatial-domain filter to receive the second reference signal and monitors a response for the second signal in the second time window.

In one embodiment, the first node assumes that a same antenna port QCL parameter is used to receive the second reference signal and monitors a response for the second signal in the second time window.

In one embodiment, the first node assumes that the response for the second signal transmitted in the second time window and the second reference signal are QCL.

In one embodiment, the first node assumes that a DMRS port of a response for the second signal transmitted in the second time window and the second reference signal are QCL.

### Embodiment 12

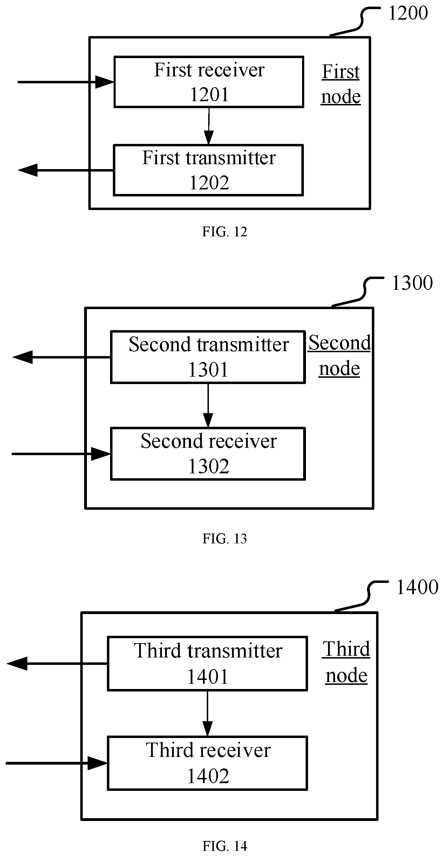

Embodiment 12 illustrates a structure block diagram of a processor in a first node according to one embodiment of the present application, as shown in FIG. 12. In FIG. 12, a processor 1200 in a first node comprises a first receiver 1201 and a first transmitter 1202.

In one embodiment, the first node is a UE.

In one embodiment, the first node is a relay node.

In one embodiment, the first receiver 1201 comprises at least one of the antenna 452, the receiver 454, the receiving processor 456, the multi-antenna receiving processor 458, the controller/processor 459, the memory 460, or the data source 467 in Embodiment 4.

In one embodiment, the first transmitter 1202 comprises at least one of the antenna 452, the transmitter 454, the transmitting processor 468, the multi-antenna transmitting processor 457, the controller/processor 459, the memory 460, or the data source 467 in Embodiment 4.

The first receiver 1201: receives a first information group; receives a first reference signal group;
the first transmitter 1202: when a first condition is satisfied, transmits a first signal in a first radio resource group.

In embodiment 12, the first information group is used to indicate the first reference signal group, and a measurement performed on the first reference signal group is used to judge whether the first condition is satisfied; whether the first condition is satisfied is used to determine whether the first signal is transmitted; the first signal is used to determine a second reference signal, and the second reference signal is one of M reference signals, M being a positive integer greater than 1; the first condition comprises that a value of a first counter is not less than a first threshold; a first reference signal is used to determine a spatial-domain relation of the first radio resource group; whether the first reference signal and the second reference signal are QCL is related to whether the second reference signal belongs to a first reference signal subset or belongs to a second reference signal subset; when the second reference signal belongs to the first reference signal subset, the first reference signal and the second reference signal are QCL; when the second reference signal belongs to the second reference signal subset, the first reference signal and the second reference signal are not QCL; the first threshold is a positive integer, and the first reference signal subset and the second reference signal subset are respectively subsets of the M reference signals; the first information group comprises a positive integer number of information block(s).

In one embodiment, a transmitter of the first reference signal subset is a first cell, a transmitter of the second reference signal subset is a second cell, the first cell is a serving cell of the first node, and the second cell is a non-serving cell of the first node.

In one embodiment, when the second reference signal belongs to the second reference signal subset, the first radio resource group comprises a first radio resource block and a second radio resource block, the first signal comprises a first sub-signal and a second sub-signal, the first sub-signal is transmitted in the first radio resource block, the second sub-signal is transmitted in the second radio resource block, the second sub-signal carries a first information block, and the first information block is used to indicate the second reference signal.

In one embodiment, when the second reference signal belongs to the second reference signal subset, the first reference signal belongs to the first reference signal subset, or the first reference signal and a reference signal in the first reference signal subset are QCL.

In one embodiment, when the first condition is satisfied and the second reference signal belongs to the second reference signal subset, the first transmitter 1202 transmits a second signal in a second radio resource group; herein, the second signal is used to determine the second reference signal, a third reference signal is used to determine a spatial-domain relation of the second radio resource group, and the second reference signal and the third reference signal are QCL.

In one embodiment, the first receiver 1201 monitors a response for the first signal in a first time window; when both the first condition and a second condition are satisfied and the second reference signal belongs to the second reference signal subset, the first transmitter 1202 transmits a second signal in a second radio resource group; herein, time-domain resources occupied by the first signal are used to determine the first time window, the first time window is not later than a start time for transmitting the second signal, the second signal is used to determine the second reference signal, a third reference signal is used to determine a spatial-domain relation of the second radio resource group, and the second reference signal and the third reference signal are QCL; the second condition comprises: not detecting the response for the first signal in the first time window.

In one embodiment, the first receiver 1201 receives M configuration information blocks and M reference signals; herein, the M configuration information block(s) is(are respectively) used to indicate the M reference signals.

### Embodiment 13

Embodiment 13 illustrates a structure block diagram of a processor in a second node according to one embodiment of the present application, as shown in FIG. 13. In FIG. 13, a processor 1300 of a second node comprises a second transmitter 1301 and a second receiver 1302.

In one embodiment, the second node is a base station.

In one embodiment, the second node is a UE.

In one embodiment, the second node is a relay node.

In one embodiment, the second transmitter 1301 comprises at least one of the antenna 420, the transmitter 418, the transmitting processor 416, the multi-antenna transmitting processor 471, the controller/processor 475, or the memory 476 in Embodiment 4.

In one embodiment, the second receiver 1302 comprises at least one of the antenna 420, the receiver 418, the receiving processor 470, the multi-antenna receiving processor 472, the controller/processor 475, the memory 476 in Embodiment 4.

The second transmitter 1301, transmits a first information group; transmits a first reference signal sub-group;
the second receiver 1302 monitors a first signal in a first radio resource group;
In one embodiment, the first information group is used to indicate a first reference signal group, and any reference signal in the first reference signal sub-group belongs to the first reference signal group; a measurement performed on the first reference signal group is used to judge whether a first condition is satisfied; whether the first condition is satisfied is used to determine whether the first signal is transmitted; the first signal is used to determine a second reference signal, and the second reference signal is one of M reference signals, M being a positive integer greater than 1; the first condition comprises that a value of a first counter is not less than a first threshold; a first reference signal is used to determine a spatial-domain relation of the first radio resource group; whether the first reference signal and the second reference signal are QCL is related to whether the second reference signal belongs to a first reference signal subset or belongs to a second reference signal subset; when the second reference signal belongs to the first reference signal subset, the first reference signal and the second reference signal are QCL; when the second reference signal belongs to the second reference signal subset, the first reference signal and the second reference signal are not QCL; the first threshold is a positive integer, and the first reference signal subset and the second reference signal subset are respectively subsets of the M reference signals; the first information group comprises a positive integer number of information block(s), the first reference signal group comprises a positive integer number of reference signal(s), and the first reference signal sub-group comprises a positive integer number of reference signal(s).

In one embodiment, a transmitter of the first reference signal subset is a first cell, a transmitter of the second reference signal subset is a second cell, the first cell is a serving cell of a transmitter of the first signal, the second cell is a non-serving cell of a transmitter of the first signal, and the second node is a maintenance base station of the first cell.

In one embodiment, when the second reference signal belongs to the second reference signal subset, the first radio resource group comprises a first radio resource block and a second radio resource block, the first signal comprises a first sub-signal and a second sub-signal, the first sub-signal is transmitted in the first radio resource block, the second sub-signal is transmitted in the second radio resource block, the second sub-signal carries a first information block, and the first information block is used to indicate the second reference signal.

In one embodiment, when the second reference signal belongs to the second reference signal subset, the first reference signal belongs to the first reference signal subset, or the first reference signal and a reference signal in the first reference signal subset are QCL.

In one embodiment, when the first signal is detected in the first radio resource group, the second transmitter 1301 transmits a response for the first signal in a first time window; herein, time-domain resources occupied by the first signal are used to determine the first time window.

In one embodiment, the second transmitter 1301 transmits M configuration information blocks and the first reference signal subset; herein, the M configuration information block(s) is(are respectively) used to indicate the M reference signals.

In one embodiment, the second receiver 1302 monitors a radio signal in each radio resource group other than the first radio resource group in a first radio resource set; herein, the first radio resource group is any radio resource group in the first radio resource set, and the first signal is a radio signal monitored in the first radio resource group.

### Embodiment 14

Embodiment 14 illustrates a structure block diagram of a processor in a third node according to one embodiment of the present application, as shown in FIG. 14. In FIG. 14, a processor 1400 in a third node comprises a third transmitter 1401 and a third receiver 1402.

In one embodiment, the third node is a UE.

In one embodiment, the third node is a relay.

In one embodiment, the third transmitter 1401 comprises at least one of the antenna 452, the transmitter 454, the transmitting processor 468, the multi-antenna transmitting processor 457, the controller/processor 459, the memory 460, or the data source 467 in Embodiment 4.

In one embodiment, the third receiver 1402 comprises at least one of the antenna 452, the receiver 454, the receiving processor 456, the multi-antenna receiving processor 458, the controller/processor 459, the memory 460, or the data source 467 in Embodiment 4.

The third transmitter 1401: transmits a second reference signal sub-group;
the third receiver 1402: monitors a second signal in a second radio resource group;
in embodiment 14, any reference signal in the second reference signal sub-group belongs to a first reference signal group, a measurement performed on the first reference signal group is used to judge whether a first condition is satisfied; the first condition comprises that a value of a first counter is not less than a first threshold; the second signal is used to determine a second reference signal, a third reference signal is used to determine a spatial-domain relation of the second radio resource group, and the second reference signal and the third reference signal are QCL; the second reference signal is one of M reference signals, M being a positive integer greater than 1; whether the first condition is satisfied and whether the second reference signal belongs to a first reference signal subset or belongs to a second reference signal subset are used to determine whether the second signal is transmitted; a necessary condition of the second signal being transmitted comprises: the first condition is satisfied and the second reference signal belongs to the second reference signal subset; the first threshold is a positive integer, and the first reference signal subset and the second reference signal subset are respectively subsets of the M reference signals; the first reference signal group comprises a positive integer number of reference signal(s), and the second reference signal sub-group comprises a positive integer number of reference signal(s).

In one embodiment, a transmitter of the first reference signal subset is a first cell, a transmitter of the second reference signal subset is a second cell, the first cell is a serving cell of a transmitter of the second signal, the second cell is a non-serving cell of the transmitter of the second signal, and the third node is a maintenance base station of the second cell.

In one embodiment, a necessary condition of the second signal being transmitted comprises: both the first condition and a second condition are satisfied and the second reference signal belongs to the second reference signal subset; the second condition comprises: not detecting a response for a first signal in a first time window; whether the first condition is satisfied is used to determine whether the first signal is transmitted; the first signal is used to determine a second reference signal, and the second reference signal is one of the M reference signals.

In one embodiment, the third receiver 1402 monitors a radio signal in each radio resource group other than the second radio resource group in a second radio resource set; herein, the second radio resource group is any radio resource group in the second radio resource set, and the second signal is a radio signal being monitored in the second radio resource group.

In one embodiment, when the second signal is detected in the second radio resource group, the third transmitter 1401 transmits a response for the second signal in a second time window; herein, time-domain resources occupied by the second signal are used to determine the second time window.

In one embodiment, the third transmitter 1401 transmits the second reference signal subset.

The ordinary skill in the art may understand that all or part of steps in the above method may be implemented by instructing related hardware through a program. The program may be stored in a computer readable storage medium, for example Read-Only Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The user equipment, terminal and UE include but are not limited to Unmanned Aerial Vehicles (UAVs), communication modules on UAVs, telecontrolled aircrafts, aircrafts, diminutive airplanes, mobile phones, tablet computers, notebooks, vehicle-mounted communication equipment, wireless sensors, network cards, Internet of Things (IoT) terminals, RFID terminals, NB-IOT terminals, Machine Type Communication (MTC) terminals, enhanced MTC (eMTC) terminals, data card, network cards, vehicle-mounted communication equipment, low-cost mobile phones, low-cost tablets and other wireless communication devices. The UE and terminal in the present application include but not limited to unmanned aerial vehicles, communication modules on unmanned aerial vehicles, telecontrolled aircrafts, aircrafts, diminutive airplanes, mobile phones, tablet computers, notebooks, vehicle-mounted communication equipment, wireless sensor, network cards, terminals for Internet of Things, RFID terminals, NB-IOT terminals, Machine Type Communication (MTC) terminals, enhanced MTC (eMTC) terminals, data cards, low-cost mobile phones, low-cost tablet computers, etc. The base station or system device in the present application includes but is not limited to macro-cellular base stations, micro-cellular base stations, home base stations, relay base station, gNB (NR node B), Transmitter Receiver Point (TRP), and other radio communication equipment.

The above are merely the preferred embodiments of the present application and are not intended to limit the scope of protection of the present application. Any modification, equivalent substitute and improvement made within the spirit and principle of the present application are intended to be included within the scope of protection of the present application.

## Claims

1. A first node for wireless communications, comprising:
a first receiver, receiving a first information group; receiving a first reference signal group;
and
a first transmitter, when a first condition is satisfied, transmitting a first signal in a first radio resource group;
wherein the first information group is used to indicate the first reference signal group, and a measurement performed on the first reference signal group is used to judge whether the first condition is satisfied; whether the first condition is satisfied is used to determine whether the first signal is transmitted; the first signal is used to determine a second reference signal, and the second reference signal is one of M reference signals, M being a positive integer greater than 1; the first condition comprises that a value of a first counter is not less than a first threshold; a first reference signal is used to determine a spatial-domain relation of the first radio resource group; whether the first reference signal and the second reference signal are QCL is related to whether the second reference signal belongs to a first reference signal subset or belongs to a second reference signal subset; when the second reference signal belongs to the first reference signal subset, the first reference signal and the second reference signal are QCL; when the second reference signal belongs to the second reference signal subset, the first reference signal and the second reference signal are not QCL; the first threshold is a positive integer, and the first reference signal subset and the second reference signal subset are respectively subsets of the M reference signals; the first information group comprises a positive integer number of information block(s).

2. The first node according to claim 1, wherein when the second reference signal belongs to the second reference signal subset, the first radio resource group comprises a first radio resource block and a second radio resource block, the first signal comprises a first sub-signal and a second sub-signal, the first sub-signal is transmitted in the first radio resource block, the second sub-signal is transmitted in the second radio resource block, the second sub-signal carries a first information block, and the first information block is used to indicate the second reference signal.

3. The first node according to claim 1 or 2, wherein when the second reference signal belongs to the second reference signal subset, the first reference signal belongs to the first reference signal subset, or the first reference signal and a reference signal in the first reference signal subset are QCL.

4. The first node according to any of claims 1-3, wherein when the first condition is satisfied and the second reference signal belongs to the second reference signal subset, the first transmitter transmits a second signal in a second radio resource group; wherein the second signal is used to determine the second reference signal, a third reference signal is used to determine a spatial-domain relation of the second radio resource group, and the second reference signal and the third reference signal are QCL;
or, the first receiver monitors a response for the first signal in a first time window; when both the first condition and a second condition are satisfied and the second reference signal belongs to the second reference signal subset, the first transmitter transmits a second signal in a second radio resource group; wherein time-domain resources occupied by the first signal are used to determine the first time window, the first time window is not later than a start time for transmitting the second signal, the second signal is used to determine the second reference signal, a third reference signal is used to determine a spatial-domain relation of the second radio resource group, and the second reference signal and the third reference signal are QCL; the second condition comprises: not detecting the response for the first signal in the first time window.

5. The first node according to any of claims 1-4, wherein the first receiver receives M configuration information blocks; receives the M reference signals; wherein the M configuration information blocks are respectively used to indicate the M reference signals.

6. A second node for wireless communications, comprising:
the second transmitter, transmitting a first information group; transmitting a first reference signal sub-group; and
a second receiver, monitoring a first signal in a first radio resource group;
wherein the first information group is used to indicate a first reference signal group, and any reference signal in the first reference signal sub-group belongs to the first reference signal group; a measurement performed on the first reference signal group is used to judge whether a first condition is satisfied; whether the first condition is satisfied is used to determine whether the first signal is transmitted; the first signal is used to determine a second reference signal, and the second reference signal is one of M reference signals, M being a positive integer greater than 1; the first condition comprises that a value of a first counter is not less than a first threshold; a first reference signal is used to determine a spatial-domain relation of the first radio resource group; whether the first reference signal and the second reference signal are QCL is related to whether the second reference signal belongs to a first reference signal subset or belongs to a second reference signal subset; when the second reference signal belongs to the first reference signal subset, the first reference signal and the second reference signal are QCL; when the second reference signal belongs to the second reference signal subset, the first reference signal and the second reference signal are not QCL; the first threshold is a positive integer, and the first reference signal subset and the second reference signal subset are respectively subsets of the M reference signals; the first information group comprises a positive integer number of information block(s), the first reference signal group comprises a positive integer number of reference signal(s), and the first reference signal sub-group comprises a positive integer number of reference signal(s).

7. A third node for wireless communications, comprising:
a third transmitter, transmitting a second reference signal sub-group; and
a third receiver, motoring a second signal in a second radio resource group;
wherein any reference signal in the second reference signal sub-group belongs to a first reference signal group, a measurement performed on the first reference signal group is used to judge whether a first condition is satisfied; the first condition comprises that a value of a first counter is not less than a first threshold; the second signal is used to determine a second reference signal, a third reference signal is used to determine a spatial-domain relation of the second radio resource group, and the second reference signal and the third reference signal are QCL; the second reference signal is one of M reference signals, M being a positive integer greater than 1; whether the first condition is satisfied and whether the second reference signal belongs to a first reference signal subset or belongs to a second reference signal subset are used to determine whether the second signal is transmitted; a necessary condition of the second signal being transmitted comprises: the first condition is satisfied and the second reference signal belongs to the second reference signal subset; the first threshold is a positive integer, and the first reference signal subset and the second reference signal subset are respectively subsets of the M reference signals; the first reference signal group comprises a positive integer number of reference signal(s), and the second reference signal sub-group comprises a positive integer number of reference signal(s).

8. A method in a first node for wireless communications, comprising:
receiving a first information group;
receiving a first reference signal group; and
when a first condition is satisfied, transmitting a first signal in a first radio resource group;
wherein the first information group is used to indicate the first reference signal group, and a measurement performed on the first reference signal group is used to judge whether the first condition is satisfied; whether the first condition is satisfied is used to determine whether the first signal is transmitted; the first signal is used to determine a second reference signal, and the second reference signal is one of M reference signals, M being a positive integer greater than 1; the first condition comprises that a value of a first counter is not less than a first threshold; a first reference signal is used to determine a spatial-domain relation of the first radio resource group; whether the first reference signal and the second reference signal are QCL is related to whether the second reference signal belongs to a first reference signal subset or belongs to a second reference signal subset; when the second reference signal belongs to the first reference signal subset, the first reference signal and the second reference signal are QCL; when the second reference signal belongs to the second reference signal subset, the first reference signal and the second reference signal are not QCL; the first threshold is a positive integer, and the first reference signal subset and the second reference signal subset are respectively subsets of the M reference signals; the first information group comprises a positive integer number of information block(s).

9. A method in a second node for wireless communications, comprising:
transmitting a first information group;
transmitting a first reference signal sub-group; and
motoring a first signal in a first radio resource group;
wherein the first information group is used to indicate a first reference signal group, and any reference signal in the first reference signal sub-group belongs to the first reference signal group; a measurement performed on the first reference signal group is used to judge whether a first condition is satisfied; whether the first condition is satisfied is used to determine whether the first signal is transmitted; the first signal is used to determine a second reference signal, and the second reference signal is one of M reference signals, M being a positive integer greater than 1; the first condition comprises that a value of a first counter is not less than a first threshold; a first reference signal is used to determine a spatial-domain relation of the first radio resource group; whether the first reference signal and the second reference signal are QCL is related to whether the second reference signal belongs to a first reference signal subset or belongs to a second reference signal subset; when the second reference signal belongs to the first reference signal subset, the first reference signal and the second reference signal are QCL; when the second reference signal belongs to the second reference signal subset, the first reference signal and the second reference signal are not QCL; the first threshold is a positive integer, and the first reference signal subset and the second reference signal subset are respectively subsets of the M reference signals; the first information group comprises a positive integer number of information block(s), the first reference signal group comprises a positive integer number of reference signal(s), and the first reference signal sub-group comprises a positive integer number of reference signal(s).

10. A method in a third node for wireless communications, comprising:
transmitting a second reference signal sub-group; and
motoring a second signal in a second radio resource group;
wherein any reference signal in the second reference signal sub-group belongs to a first reference signal group, a measurement performed on the first reference signal group is used to judge whether a first condition is satisfied; the first condition comprises that a value of a first counter is not less than a first threshold; the second signal is used to determine a second reference signal, a third reference signal is used to determine a spatial-domain relation of the second radio resource group, and the second reference signal and the third reference signal are QCL; the second reference signal is one of M reference signals, M being a positive integer greater than 1; whether the first condition is satisfied and whether the second reference signal belongs to a first reference signal subset or belongs to a second reference signal subset are used to determine whether the second signal is transmitted; a necessary condition of the second signal being transmitted comprises: the first condition is satisfied and the second reference signal belongs to the second reference signal subset; the first threshold is a positive integer, and the first reference signal subset and the second reference signal subset are respectively subsets of the M reference signals; the first reference signal group comprises a positive integer number of reference signal(s), and the second reference signal sub-group comprises a positive integer number of reference signal(s).
